# EUROPÄISCHE PATENTSCHRIFT

(11) **EP 1 874 841 B1**
(45) Veröffentlichungstag und Bekanntmachung des Hinweises auf die Patenterteilung: **23.09.2015**
(21) Anmeldenummer: 06706879.1
(22) Anmeldetag: 11.02.2006
(51) Int. Cl.: C09D 175/04, C09D 7/12, C08G 18/08, C08G 18/12, C08G 18/50, C08K 3/22

(54) **ZUBEREITUNG ZUR BESCHICHTUNG VON SUBSTRATOBERFLÄCHEN**
PREPARATION FOR COATING SUBSTRATE SURFACES
PREPARATION POUR ENDUIRE DES SURFACES DE SUBSTRAT

(30) Priorität: 22.03.2005 DE 102005013767
(43) Veröffentlichungstag der Anmeldung: 09.01.2008
(73) Patentinhaber: BASF Coatings GmbH, 48165 Münster-Hiltrup (DE)
(72) Erfinder: JETTON, Simone, 87746 Erkheim (DE); MAIER, Robert, 87787 Wolfertschwenden (DE); DE PEUTER, Frans, B-2400 Mol (BE)
(74) Vertreter: Leifert & Steffan
(86) Internationale Anmeldenummer: PCT/EP2006/001267
(87) Internationale Veröffentlichungsnummer: WO 2006/099918

(56) Entgegenhaltungen:
- EP-A- 0 339 862
- EP-A- 1 162 220
- WO-A-03/072667
- WO-A2-02/04538

## Beschreibung

Die vorliegende Erfindung betrifft eine wäßrige Zubereitung, deren Verwendung, ein Verfahren zur Beschichtung eines Substrats und ein beschichtetes Substrat.

Schutzbeschichtungen von Außenanlagen, wie bspw. Dächern, sind im allgemeinen den Witterungs- und Umwelteinflüssen, wie Kälte und Hitze, UV-Einstrahlung, Pilz-, Flechten- und Algenbefall, sowie Verschmutzungen infolge von Schwebstoffen ausgesetzt. Ein wesentliches Qualitätsmerkmal von Außenbeschichtungen ist, daß diese gegenüber den besagten Witterungs- und Umwelteinflüssen weitgehend resistent sind. Die WO 03/072667 betrifft eine Außenbeschichtung, welche auf fluormodifizierten Polyurethanverbindungen basiert. Die in diesem Dokument beschriebenen Beschichtungen weisen aufgrund der "Fluormodifizierung" verhältnismäßig hohe Oberflächenenergien auf und haben somit schmutzabweisende Eigenschaften. Außerdem verfügen die in der WO 03/072667 beschriebenen Außenbeschichtungen im allgemeinen über recht gute Substrathaftungseigenschaften und über eine hinreichend gute mechanische Robustheit. Jedoch wurde festgestellt, daß die schmutzabweisenden Eigenschaften derartiger Außenbeschichtungen nicht regelmäßig zufriedenstellend sind und daß sich je nach Witterungseinfluß Pilze, Algen und Flechten auf den entsprechend beschichteten Substraten ausbreiten können. Dies ist deshalb problematisch, da dann das Erfordernis besteht, die Substratoberflächen (z.B. Dächer) regelmäßig zu reinigen, was in der Regel einen beträchtlichen Kostenaufwand bedeutet.

Aufgabe der vorliegenden Erfindung ist es somit, ein Beschichtungsmittel bereitzustellen, mit welchem Außenbeschichtungen hergestellt werden können, welche die vorstehend genannten Nachteile nicht aufweisen.

Die Lösung dieser Aufgabe ist eine wäßrige Zubereitung zur Beschichtung von Substratoberflächen, enthaltend
i) 20 bis 80 Gew. % Wasser,
ii) 10 bis 75 Gew. % einer in dispergierter Form vorliegenden Polyurethanverbindung,
iii) 0,5 bis 30 Gew. % dispergierte Mineralpartikel und
iv) 0 bis 50 Gew. % einer in dispergierter Form vorliegenden, sich von der Polyurethanverbindung ii) unterscheidenden Polymerkomponente, die in Form von Co- oder Homopolymeren oder Mischungen davon vorliegt, wobei
die Polyurethanverbindung ii) gemäß einer Urethan-Bindung verknüpfte Polyol- und Isocyanatstruktureinheiten aufweist, 1 bis 50, bevorzugt 3 bis 10 Gew. % der Polyolstruktureinheiten aus polyaddierten Polyolen hervorgehen, die ein oder mehr Fluor enthaltende Substituenten, sowie zwei oder mehr Isocyanat-reaktive Hydroxylgruppen, aufweisen, mindestens 50 Gew. % der Isocyanatstruktureinheiten aus polyaddierten Polyisocyanat, Polyisocyanat-Derivat und/oder Polyisocyanat-Homologen mit jeweils zwei oder mehreren aliphatischen oder aromatischen Isocyanat-Gruppen oder Mischungen davon hervorgehen und die dispergierten Mineralpartikel iii) farbloses oder weißes Metalloxid in Form von ZnO und/ oder TiO₂ enthalten, dadurch gekennzeichnet, dass mindestens 50 Gew. % der gesamten Metalloxidpartikel iii) eine Partikelgröße von maximal 500 nm (Messnorm für die Bestimmung der Partikelgröße: DIN 53206; nach Dispergieren der Partikel in Wasser mit Ultraschall; Messung durch Photonenkorrelationsspektroskopie) haben.

Die Polyurethanverbindung ii) liegt als Polyaddukt (Produkt einer Polyaddition) vor, wobei die Polyolstruktureinheiten aus den umgesetzten (polyaddierten) Polyolen und die Isocyanatstruktureinheiten aus den umgesetzten (polyaddierten) Polyisocyanaten (und/oder Polyisocyanat-Derivaten und Polyisocyanat-Homologenen) resultieren. Die Angabe, daß 1 bis 50, bevorzugt 3 bis 10 Gew. % der Polyolstruktureinheiten aus polyaddierten Polyolen hervorgehen, die ein oder mehr Fluor enthaltende Substituenten sowie zwei oder mehr Isocyanat-reaktive Hydroxylgruppen, aufweisen, soll bedeuten, daß 1 bis 50, bevorzugt 3 bis 10 Gew. % der gesamten polyaddierten Polyole (also die Polyole, aus welchen die Polyolstruktureinheiten der Polyurethanverbindung ii) hervorgegangen sind) ein oder mehr Fluor enthaltende Substituenten sowie zwei oder mehr Isocyanat reaktive Hydroxylgruppen aufweisen.
Die besagten Polyolstruktureinheiten können neben den Fluor enthaltenden Substituenten und den zwei oder mehr Isocyanat-reaktiven Hydroxylgruppen noch andere Substituenten enthalten, wobei dies jedoch nicht bevorzugt ist. Unter dem Ausdruck, daß mindestens 50 Gew. % der Isocyanatstruktureinheiten aus polyaddiertem Polyisocyanat, Polyisocyanat-Derivat und/oder Polyisocyanat-Homologen mit jeweils zwei oder mehreren aliphatischen oder aromatischen Isocyanatgruppen oder Mischungen davon, hervorgehen, soll verstanden werden, daß mindestens 50 Gew. % der nach dem Prinzip einer Urethan-Bindung polyaddierten Isocyanat-Monomere aus polyaddierten Polyisocyanat, Polyisocyanat-Derivat und/oder Polyisocyanat-Homologen mit jeweils zwei oder mehreren aliphatischen oder aromatischen Isocyanat-Gruppen oder Mischungen davon, resultieren.

Unter Polyisocyanat-Derivat sollen folgende Stoffgruppen verstanden werden, welche auch als sogenannte "Lackpolyisocyanate" bekannt sind:
- Urethane, wie sie durch Umsetzung mit Polyolen erhalten werden;
- Biurete, wie sie beispielsweise durch Umsetzung von drei Diisocyanatmolekülen mit einem Molekül Wasser entstehen;
- Isocyanurate, die durch katalytische Trimerisierung bzw. Dimerisierung von Diisocyanaten erhalten werden;
- Allophanate, wie sie sich bei der Umsetzung mit Alkoholen in Gegegnwart geeigneter Katalysatoren bilden.

Bei den genannten Polyisocyanat-Homologen handelt es sich, bezogen auf (monomeres) Diisocyanat als solches, um höherfunktionelle oligomere Polyisocyanate mit gleichen Strukturelementen, wobei als Beispiele MDI (zweikerniges Diisocyanat) und Polymeric MDI (mehrkerniges Polyisocyanat) genannt sein sollen.

Häufig enthält die flüssige (wäßrige) Phase der erfindungsgemäßen Zubereitung gelöste Stoffe.

Die mit der erfindungsgemäßen wäßrigen Zubereitung beschichteten Substratoberflächen weisen schmutzabweisende und selbstreinigende Eigenschaften auf. Wesentlich ist auch, daß entsprechend beschichtete Oberflächen weitgehend resistent gegenüber Algen-, Pilz- und Flechtenbefall sind - und zwar selbst, wenn in der erfindungsgemäßen wäßrigen Zubereitung weder Fungizide noch Herbizide enthalten sind. Es ist jedoch nicht ausgeschlossen, daß die erfindungsgemäße wäßrige Zubereitung zusätzlich Pestizide, z.B. in Form von Fungiziden und Herbiziden enthält, wobei dies jedoch nicht bevorzugt ist. Auch die mechanischen Eigenschaften sowie die Haftungseigenschaften der mit der erfindungsgemäßen Zubereitung erzeugten Beschichtungen sind als gut anzusehen - und zwar insbesondere dann, wenn zusätzlich die Polymerkomponente iv) in der Zubereitung enthalten ist. Besonders hervorzuheben sind die guten Haftungseigenschaften auf mineralischen Substraten, insbesondere auf Betonsubstraten. Desweiteren zeigen besagte Beschichtungen eine ausgezeichnete UV-Stabilität und vermitteln beschichteten Betonoberflächen eine gute "Ausblühungs-Resistenz" (Effloreszenzvermeidung). Außerdem bieten derartige Beschichtungen eine hohe Chemikalienresistenz, z.B. gegenüber verdünnten starken Basen und verdünnten starken Säuren, wie Natriumhydroxid und Salzsäure. Schließlich sollen auch die Öl- und Wasser-abweisenden Eigenschaften der besagten Beschichtungen erwähnt werden.

Meist liegen die Fluor enthaltenden Substituenten der Polyolstruktureinheiten der Polyurethanverbindung ii) als Substituenten der allgemeinen Formel

F(CF₂)ₓ - (CH₂)_{y} -

mit x = 4-10 und y = 1-6
und/ oder der allgemeinen Formel

CF₃-CF₂-CF₂O-(CF(CF₃)CF₂O)₂-CF(CF₃)-CH₂-

mit z = 1-10,
vor.

Jedoch können die Fluor enthaltenden Substituenten zumindest teilweise auch in Form von anderen Fluorliganden vorliegen, was jedoch nicht bevorzugt ist.

Normalerweise weisen die Polyolstruktureinheiten, welche ein oder mehr Fluor enthaltende Substituenten enthalten, ein mittleres Molekulargewicht (Zahlenmittel) von 300 bis 4000, bevorzugt von 500 bis 2000 g/ mol auf (diese Angabe bezieht sich auf die polyaddierten Polyole, aus welchen die Polyolstruktureinheiten resultieren).

In einer bevorzugten Ausführungsform der Erfindung resultieren 50 bis 99, bevorzugt 90 bis 97 Gew. % der Polyolstruktureinheiten aus polyaddierten Polyolkomponenten, die keine Fluorsubsituenten aufweisen.

Im allgemeinen enthält die erfindungsgemäße wäßrige Zubereitung 20 bis 50 Gew. % der in dispergierter Form vorliegenden Polyurethanverbindung ii).

Die Polyurethanverbindung (ii) weist bevorzugt auch polyaddierte Amin-Komponenten, insbesondere Polyamin-Komponenten, auf. Dann liegt die Polyurethanverbindung ii) als Fluorsubstituenten enthaltendes Polyurethanpolyharnstoffpolymer vor, das neben den gemäß einer Urethan-Bindung verknüpften Polyol- und Isocyanatstruktureinheiten zusätzlich noch gemäß einer Harnstoff-Bindung verknüpfte Polyaminstruktureinheiten, aufweist.

Der erfindungsgemäß bevorzugte Typ der Polyurethanverbindung ii) ist erhältlich durch:
a) die Herstellung einer Bindemittel-Komponente auf Basis einer wäßrigen Lösung oder Dispersion von niedermolekularen hydroxy- und/ oder aminofunktionellen Oligo- bzw. Polyurethanen, wobei man
a₁) 2,5 bis 12 Gewichtsteile einer fluormodifizierten Polyolkomponente (A)(i') mit zwei oder mehreren gegenüber Isocyanaten reaktiven Hydroxyl-Gruppen und einer Molekularmasse von 500 bis 2000 Dalton, 10 bis 50 Gewichtsteile einer höhermolekularen Polyol-Komponente (A)(ii') mit zwei oder mehreren gegenüber Polyisocyanaten reaktiven Hydroxyl-Gruppen und einer Molekularmasse von 500 bis 6000 Dalton sowie 0 bis 10 Gewichtsteile einer niedermolekularen Polyol-Komponente (A)(iii') mit zwei oder mehreren gegenüber Polyisocyanaten reaktiven Hydroxyl-Gruppen und einer Molekularmasse von 50 bis 500 Dalton mit 2 bis 30 Gewichtsteilen einer Polyisocyanat-Komponente (B), enthaltend oder bevorzugt bestehend aus mindestens einem Polyisocyanat, Polyisocyanat-Derivat oder Polyisocyanat-Homologes mit zwei oder mehreren aliphatischen oder aromatischen Isocyanat-Gruppen unter Zugabe von 0 bis 25 Gewichtsteilen einer Lösemittel-Komponente (C), enthaltend oder bevorzugt bestehend aus einem inerten organischen Lösemittel, ggf. in Gegenwart eines Katalysators zur Reaktion bringt,
a₂) das Polyurethan-Preaddukt aus Stufe a₁) mit 1 bis 10 Gewichtsteilen einer niedermolekularen und anionisch modifizierbaren Polyol-Komponente (A)(iv') mit zwei oder mehreren gegenüber Polyisocyanaten reaktiven Hydroxyl-Gruppen und einer oder mehreren inerten Carbonsäure- und/oder Sulfonsäure-Gruppe(n), welche mit Hilfe von Basen teilweise oder vollständig in Carboxylat- bzw. Sulfonatgruppen überführt werden können oder bereits in Form von Carboxylat und/oder Sulfonat-Gruppen vorliegen, mit einer Molekularmasse von 100 bis 1000 Dalton und/oder mit 0 bis 20 Gewichtsteilen einer polymeren Diolkomponente (A)(v') mit zwei oder mehreren gegenüber Polyisocyanaten reaktiven Hydroxyl-Gruppen und weiteren gegenüber Polyisocyanaten inerten hydrophilen Gruppen mit einer Molekularmasse von 500 bis 5000 Dalton, ggf. in Gegenwart eines Katalysators umsetzt,
a₃) die freien Isocyanat-Gruppen des Polyurethan Prepolymers aus Stufe a₂) vollständig oder teilweise mit 0 bis 15 Gewichtsteilen einer multifunktionellen Kettenstopper-Komponente (D) mit drei oder mehreren gegenüber Isocyanat-Gruppen reaktiven Hydroxyl- und/oder primären und/oder sekundären Amino-Gruppen und einer Molekularmasse von 50 bis 500 Dalton umsetzt, von denen eine mit dem Polyurethan-Preaddukt abreagiert,
a₄) das multifunktionelle Polyurethan- Oligomer oder -Polymer aus Stufe a₃) zur teilweisen oder vollständigen Neutralisation der Säure-Gruppen mit 0,1 bis 10 Gewichtsteilen einer Neutralisations-Komponente (E) versetzt und anschließend
a₅) das neutralisierte Polyurethan-Oligomer oder -Polymer aus Stufe a₄) in 40 bis 120 Gewichtsteilen Wasser, welches noch 0 bis 50 Gewichtsteile einer Formulierungs-Komponente (F) enthalten kann, dispergiert
a₆) das nur teilweise kettengestoppte Polyurethan-Oligomer oder -Polymer aus Stufe a₅) noch mit 0 bis 10 Gewichtsteilen einer Kettenverlängerungs-Komponente (G) mit zwei oder mehreren gegenüber Isocyanat-Gruppen reaktiven primären und/oder sekundären Amino-Gruppen und einer Molekularmasse von 50 bis 500 Dalton umsetzt
   sowie ggf.
b) die anschließende Umsetzung der Bindemittel-Komponente aus den Stufen a₄), a₅) oder a₆) mit 20 bis 100 Gewichtsteilen einer Vernetzer-Komponente (H), wobei als Vernetzer-Komponente (H) wasserdispergierbare Polyisocyanate mit aliphatisch und/oder cycloaliphatisch und/oder aromatisch gebundenen Isocyanat-Gruppen eingesetzt werden, welche 0 bis 20 Gewichtsteile eines organischen Lösemittels enthalten können.

In der Reaktionstufe a) wird zunächst eine lösemittelarme Bindemittel-Komponente auf Basis einer wäßrigen Lösung oder Dispersion von ggf. hydroxy- und/oder aminofunktionellen Oligo- oder Polyurethanen mit fluorierten Seitenketten hergestellt, die dann ggf. in der Reaktionstufe b) mit einer Vernetzer-Komponente auf Basis wasserdispergierbarer Polyisocyanate weiter zu einem wäßrigen hochvernetzten Zweikomponenten-Polyurethanverbindung umgesetzt wird.

Die Herstellung der Bindemittel-Komponente erfolgt mit Hilfe eines modifizierten Prepolymer Mixing Process, dem sog. High Solids Process (HSP Technology). Hohe Scherkräfte sind dabei nicht erforderlich, so das z. B. schnelllaufende Rührer, Dissolver oder Rotor/Stator-Mischer verwendet werden können.

Zur Durchführung dieses Verfahrens werden unter Anwendung der in der Polyurethan-Chemie üblichen Techniken in der Reaktionsstufe a₁) 2,5 bis 12 Gewichtsteile einer fluormodifizierten Polyolkomponente (A)(i'), 10 bis 50 Gewichtsteile einer höhermolekularen Polyol-Komponente (A)(ii') sowie ggf. 0 bis 10 Gewichtsteile einer niedermolekularen Polyol-Komponente (A) (iii') mit 2 bis 30 Gewichtsteilen einer Polyisocyanat-Komponente (B) unter Zugabe von 0 bis 25 Gewichtsteilen einer Lösemittel-Komponente (C) ggf. in Gegenwart eines Katalysators teilweise oder vollständig zur Reaktion gebracht, wobei die Hydroxyl-Gruppen der Komponenten (A)(i'), (A)(ii') und (A)(iii') teilweise oder vollständig mit den Isocyanat-Gruppen der Komponente (B) umgesetzt werden.

Die Herstellung des Polyurethan-Preaddukts gemäss Reaktionsstufe a₁) erfolgt vorzugsweise in der Weise, daß zunächst die Komponente (B) innerhalb eines Zeitraumes von einigen Minuten der Komponente (A)(i'), ggf. gelöst in der Komponente (C) zugesetzt wird und anschließend innerhalb eines Zeitraumes von einigen Minuten bis zu einigen Stunden ein Gemisch aus den Komponenten, (A)(ii'), (A)(iii') und (C) zugesetzt bzw. zudosiert wird oder alternativ dazu das Gemisch aus den Komponenten (A)(i'), (A)(ii'),(A)(iii') und (C) innerhalb eines Zeitraumes von einigen Minuten bis zu einigen Stunden der Komponente (B) zugesetzt bzw. zudosiert wird. Zur Verringerung der Viskosität kann in der Reaktionsstufe a₁) eine Lösemittel-Komponente (C) in geringen Mengen eingesetzt werden.

Die fluormodifizierte Polyolkomponente (A)(i') enthält oder besteht bevorzugt aus dem Umsetzungsprodukt bzw. Makromonomer von monofunktionellen Fluoralkoholen, aliphatischen oder aromatischen Diisocyanaten, und Diethanolamin. Als Fluoralkohole können Perfluoralkylalkohole mit terminalen Methylen-Gruppen (Kohlenwasserstoff-Spacern) der allgemeinen Formel

F(CF₂)ₓ-(CH₂)_{y}-OH,

mit x = 4 - 20 und y = 1- 6
sowie handelsübliche Gemische von diesen (z. B. Zonyl^{®} BA, Du Pont de Nemours) oder Hexafluorpropenoxid (HFPO)-Oligomer-Alkohole der allgemeinen Formel
CF₃CF₂CF₂O-(CF(CF₃)CF₂O)₂-CF(CF₃)CH₂-OH,
mit z =1 - 10
(z. B. Krytox^{®}, Du Pont de Nemours) oder aber Gemische aus beiden eingesetzt werden.

Der Fluoralkohol wird zunächst bei einer Temperatur zwischen 0 und 30 °C unter Zusatz eines Katalysators sowie eines geeigneten Lösemittels zum entsprechenden Diisocyanat innerhalb eines Zeitraumes von 30-60 Minuten zugetropft und in der Weise zur Reaktion gebracht, dass nur eine Isocyanat-Gruppe umgesetzt wird. In einem weiteren Schritt wird das entstandene Preaddukt innerhalb von einigen Minuten unter Kühlung in Diethanolamin eingetropft.

Geeignete Lösemittel sind z. B. N-Methylpyrrolidon (NMP) oder Tetrahydrofuran.

Gebräuchliche Katalysatoren für Polyadditions-Reaktionen an Polyisocyanate sind bspw. Dibutylzinnoxid, Dibutylzinndilaurat (DBTL), Triethylamin, Zinn(II)-octoat, 1,4-Diazabicyclo[2,2,2]octan (DABCO), 1,4-Diaza-bicyclo[3,2,0]-5-nonen (DBN), 1,5-Diazabicyclo[5,4,0]-7-undecen (DBU).

Die Polyol-Komponente (A)(ii') enthält oder besteht bevorzugt aus einem höhermolekularen Polyol mit zwei oder mehreren gegenüber Polyisocyanaten reaktiven Hydroxyl-Gruppen mit einer mittleren Molekularmasse (Zahlenmittel) von 500 bis 6 000 Dalton. Als geeignete polymere Polyole können Polyalkylenglykole, aliphatische oder aromatische Polyester, Polycaprolactone, Polycarbonate, α,ω-Polymethacrylatdiole, α,ω-Dihydroxyalkylpolydimethylsiloxane, hydroxyfunktionelle Makromonomere, hydroxyfunktionelle Telechele, hydroxyfunktionelle Epoxid-Harze oder geeignete Gemische daraus eingesetzt werden.

Geeignete Polyalkylenglykole sind beispielsweise Polypropylenglykole, Polytetramethylenglykole bzw. Polytetrahydrofurane, hydrophob modifizierte Polyetherpolymere enthaltend oder bevorzugt bestehend aus verseifungsstabilen Blockcopolymeren mit ABA-, BAB- oder (AB)ₙ-Struktur, wobei A ein Polymer-Segment mit hydrophobierenden Eigenschaften und B ein Polymer-Segment auf Basis Polypropylenoxid repräsentiert, hydrophob modifizierte Polyetherpolyole enthaltend oder bevorzugt bestehend aus verseifungsstabilen Blockcopolymeren mit A₁A₂A₃- oder (A₁A₂)ₙ-Struktur, wobei A jeweils Polymer-Segmente mit hydrophobierenden Eigenschaften repräsentiert, hydrophob modifizierte statistische Polyetherpolyole enthaltend oder bevorzugt bestehend aus verseifungsstabilen statistischen Copolymeren aus mindestens einem hydrophoben Alkylenoxid und Propylenoxid.

Bevorzugt werden lineare bzw. difunktionelle hydrophob modifizierte Polyetherpolymere bestehend aus verseifungsstabilen Blockcopolymeren mit ABA-, BAB- oder (AB)ₙ-Struktur, wobei A ein Polymer-Segment mit hydrophobierenden Eigenschaften und B ein Polymer-Segment auf Basis Polypropylenoxid darstellt, mit einer mittleren Molekularmasse (Zahlenmittel) von 1 000 bis 3 000 Dalton eingesetzt.

Geeignete aliphatische oder aromatische Polyester sind beispielsweise Kondensate auf Basis von 1,2-Ethandiol bzw. Ethylenglykol und/oder 1,4 Butandiol bzw. 1,4-Butylenglykol und/oder 1,6-Hexandiol bzw. 1,6-Hexamethylenglykol und/oder 2,2-Dimethyl-1,3-propandiol bzw. Neopentylglykol und/oder 2-Ethyl-2-hydroxymethyl-1,3-propandiol bzw. Trimethylolpropan sowie 1,6-Hexandisäure bzw. Adipinsäure und/oder 1,2-Benzoldicarbonsäure bzw. Phthalsäure und/oder 1,3 Benzoldicarbonsäure bzw. Isophthalsäure und/oder 1,4-Benzoldicarbonsäure bzw. Terephthalsäure und/oder 5-Sulfoisophthalsäure-Natrium bzw. deren Ester sowie Umsetzungsprodukte aus Epoxiden und Fettsäuren. Bevorzugt werden lineare bzw. difunktionelle aliphatische oder aromatische Polyester-Polyole mit einer mittleren Molekularmasse (Zahlenmittel) von 1 000 bis 3 000 Dalton eingesetzt.

Polycaprolactone auf Basis von ε-Caprolacton (CAPA-Typen, Fa. Solvay Interox Ltd.), Polycarbonate auf Basis von Dialkylcarbonaten und Glykolen (Desmophen 2020, Fa. Bayer AG) und Kombinationen (Desmophen C 200, Fa. Bayer AG) daraus gehören ebenfalls zur Gruppe der Polyester. Bevorzugt werden lineare bzw. difunktionelle Typen mit einer mittleren Molekularmasse (Zahlenmittel) von 1 000 bis 3 000 Dalton eingesetzt.

Als α,ω-Polymethacrylatdiole (TEGO^{®} Diol BD 1000, TEGO^{®} Diol MD 1000 N, TEGO^{®} Diol MD 1000 X, Fa. Tego Chemie Service GmbH) mit einer Molekularmasse von 1000 bis 3000 Dalton und α,ω-Dihydroxyalkylpolydimethylsiloxane werden bevorzugt lineare bzw. difunktionelle Typen mit einer mittleren Molekularmasse (Zahlenmittel) von 500 bis 3 000 Dalton eingesetzt.

Die Komponente (A)(iii') enthält oder besteht bevorzugt aus einem niedermolekularen Polyol mit zwei oder mehreren gegenüber Polyisocyanaten reaktiven Hydroxyl-Gruppen mit einer mittleren Molekularmasse von 50 bis 499 Dalton. Als geeignete niedermolekulare Polyole können beispielsweise 1,2-Ethandiol bzw. Ethylenglykol, 1,2-Propandiol bzw. 1,2-Propylenglykol, 1,3 Propandiol bzw. 1,3-Propylenglykol, 1,4-Butandiol bzw. 1,4-Butylenglykol, 1,6-Hexandiol bzw. 1,6-Hexamethylenglykol, 2-Methyl-1,3-propandiol, 2,2-Dimethyl-1,3-propandiol bzw. Neopentylglykol, 1,4-Bis-(hydroxymethyl)-cyclohexan bzw. Cyclohexandimethanol, 1,2,3 Propantriol bzw. Glycerol, 2-Hydroxymethyl-2-methyl-1,3-propanol bzw. Trimethylolethan, 2-Ethyl-2-hydroxymethyl-1,3-propandiol bzw. Trimethylolpropan, 2,2-Bis-(hydroxymethyl)-1,3-propandiol bzw. Pentaerythrit eingesetzt werden. Bevorzugt wird 1,4-Butandiol eingesetzt.

Die Polyisocyanat-Komponente (B) enthält oder besteht bevorzugt aus mindestens einem Polyisocyanat, Polyisocyanat-Derivat oder Polyisocyanat-Homologen mit zwei oder mehreren aliphatischen oder aromatischen Isocyanat-Gruppen. Geeignet sind insbesondere die in der Polyurethan-Chemie hinreichend bekannten Polyisocyanate oder Kombinationen daraus. Als geeignete aliphatische Polyisocyanate können beispielsweise 1,6-Diisocyanatohexan (HDI), 1-Isocyanato-5-isocyanatomethyl-3,3,5-trimethyl-cyclohexan bzw. Isophorondiisocyanat (IPDI), Bis-(4-isocyanatocyclo-hexyl)-methan (H₁₂MDI), 1,3-Bis-(1-isocyanato-1-methyl-ethyl)-benzol (m-TMXDI) bzw. technische Isomeren-Gemische der einzelnen aromatischen Polyisocyanate eingesetzt werden. Als geeignete aromatische Polyisocyanate können beispielsweise 2,4-Diisocyanattoluol bzw. Toluoldiisocyanat (TDI), Bis-(4-isocyanatophenyl)-methan (MDI) und ggf. dessen höhere Homologe (Polymeric MDI) bzw. technische Isomeren-Gemische der einzelnen aromatischen Polyisocyanate eingesetzt werden. Weiterhin sind auch die sogenannten "Lackpolyisocyanate" auf Basis von Bis-(4-isocyanatocyclo-hexyl)-methan (H₁₂MDI), 1,6-Diisocyanatohexan (HDI), 1-Isocyanato-5-isocyanatomethyl-3,3,5-trimethyl-cyclohexan (IPDI) grundsätzlich geeignet. Der Begriff "Lackpolyisocyanate" kennzeichnet Allophanat-, Biuret-, Carbodiimid-, Isocyanurat-, Uretdion-, Urethan-Gruppen aufweisende Derivate dieser Diisocyanate, bei denen der Rest-Gehalt an monomeren Diisocyanaten dem Stand der Technik entsprechend auf ein Minimum reduziert wurde. Daneben können auch noch modifizierte Polyisocyanate eingesetzt werden, die beispielsweise durch hydrophile Modifizierung von "Lackpolyisocyanaten" auf Basis von 1,6-Diisocyanatohexan (HDI) zugänglich sind. Die aliphatischen Polyisocyanate sind gegenüber den aromatischen Polyisocyanaten zu bevorzugen. Weiterhin werden Polyisocyanate mit Isocyanat-Gruppen unterschiedlicher Reaktivität bevorzugt.

Das NCO/OH-Equivalentverhältnis der Komponenten (A) und (B) wird auf einen Wert von 1,2 bis 2,5, vorzugsweise 1,5 bis 2,25 eingestellt.

Vorzugsweise werden Polyisocyanate mit Isocyanat-Gruppen unterschiedlicher Reaktivität eingesetzt, um engere Molekularmassen-Verteilungen mit geringerer Uneinheitlichkeit zu erhalten. Dementsprechend werden Polyurethan-Prepolymere mit linearer Struktur bevorzugt, die sich aus difunktionellen Polyol- und Polyisocyanat-Komponenten zusammensetzen. Die Viskosität der Polyurethan-Prepolymere ist relativ niedrig und weitgehend unabhängig von der Struktur der verwendeten Polyol- und Polyisocyanat-Komponenten.

Die Lösemittel-Komponente (C) enthält oder besteht bevorzugt aus einem inerten organischen Lösemittel. Als geeignete organische Lösemittel können beispielsweise niedrigsiedende Lösemittel wie Aceton und Methylethylketon oder hochsiedende Lösemittel wie N-Methylpyrrolidon und Dipropylenglykoldimethylether (Proglyde DMM^{®}) eingesetzt werden. Nach der Herstellung können die niedrigsiedenden organischen Lösemittel ggf. durch Redestillation wieder entfernt werden. Gemäß einer besonders bevorzugten Ausführungsform enthält die Polyurethan-Dispersion weniger als 10 Gew. % an organischen Lösemitteln.

In der nachfolgenden Reaktionssstufe a₂) wird das teilweise oder vollständig abreagierte Polyurethan-Preaddukt aus Stufe a₁) mit 1 bis 10 Gewichtsteilen einer niedermolekularen und anionisch modifizierbaren Polyol-Komponente (A)(iv') und/oder mit 0 bis 20 Gewichtsteilen einer polymeren Diolkomponente (A)(v') ggf. in Gegenwart eines Katalysators zum entsprechenden Polyurethan-Prepolymer zur Reaktion gebracht.

Die Herstellung des Polyurethan-Prepolymers gemäss Reaktionsstufe a₂) erfolgt vorzugsweise in der Weise, daß die feingemahlene Polyol-Komponente (A)(iv') mit einer mittleren Teilchengröße (Zahlungsmittel) < 150 µm und die polymere Diolkomponente (A)(v') innerhalb eines Zeitraumes von einigen Minuten bis zu einigen Stunden dem Polyurethan-Preaddukt aus Stufe a₁) zugesetzt bzw. zudosiert werden. Das in Reaktionsstufe a₂) eingesetzte Polyurethan-Preaddukt aus Stufe a₁) kann bei entsprechender Prozessführung bzw. unvollständiger Umsetzung neben Isocyanat-Gruppen und/oder Polyisocyanat-Monomeren ggf. auch noch freie Hydroxyl-Gruppen aufweisen.

Die Komponente (A)(iv') enthält oder besteht bevorzugt aus mindestens einem niedermolekularen und anionisch modifizierbaren Polyol mit einer oder mehreren gegenüber Polyisocyanaten reaktiven Hydroxyl-Gruppen und einer oder mehreren gegenüber Polyisocyanaten inerten Carbonsäure und/oder Sulfonsäure-Gruppe(n), die in Gegenwart von Basen ganz oder teilweise in Carboxylat- und/oder Sulfonat-Gruppen überführt werden können oder bereits in Form von Carboxylat- und/oder Sulfonat-Gruppen vorliegen und einer Molekularmasse von 100 bis 1000 Dalton. Als niedermolekulare und anionisch modifizierbare Polyole können beispielsweise Hydroxypivalinsäure (Handelsname HPA, Fa. Perstorp Specialty Chemicals AB), 2-Hydroxymethyl-3-hydroxypropansäure bzw. Dimethylolessigsäure, 2-Hydroxymethyl-2-methyl-3-hydroxypropansäure bzw. Dimethylolpropionsäure (Handelsname Bis-MPA, Fa. Perstorp Specialty Chemicals AB), 2-Hydroxymethyl-2-ethyl-3-hydroxypropansäure bzw. Dimethylolbuttersäure, 2-Hydroxymethyl-2-propyl-3-hydroxypropansäure bzw. Dimethylolvaleriansäure, Citronensäure, Weinsäure, [Tris-(hydroxymethyl)-methyl]-3-aminopropansulfonsäure (TAPS, Fa. Raschig GmbH), Building Blocks auf Basis von 1,3-Propansulfon (Fa. Raschig GmbH) und/oder 3-Mercaptopropansulfonsäure, Natrium-Salz (Handelsname MPS, Fa. Raschig GmbH) eingesetzt werden. Diese Building Blocks können ggf. auch Amino-Gruppen anstelle von Hydroxyl-Gruppen aufweisen. Bevorzugt werden Bishydroxyalkancarbonsäuren und/oder Bishydroxysulfonsäuren bzw. deren Alkalisalze mit einer Molekularmasse von 100 bis 499 Dalton eingesetzt und insbesondere 2-Hydroxymethyl-2-methyl-3-hydroxypropansäure bzw. Dimethylolpropionsäure (Handelsname DMPA^{®} der Fa. Trimet Technical Products, Inc.).

Die Komponente (A)(v') besteht aus 0 bis 20 Gewichtsteilen einer polymeren Polyol-Komponente mit zwei oder mehreren gegenüber Polyisocyanaten reaktiven Hydroxyl-Gruppen und weiteren gegenüber Polyisocyanaten inerten hydrophilen Gruppen, wie z.B. Polyethylenoxid-Segmente, mit einer Molekularmasse von 500 bis 5 000 Dalton. Bevorzugt werden Umsetzungsprodukte aus Poly-(ethylenoxid[-*co*/*block*/*ran*-propylenoxid])-monoalkylethern, einem Diisocyanat und Diethanolamin eingesetzt.

Die Durchführung der Reaktionsstufen a₁) und a₂) ist im Hinblick auf die Reaktionsbedingungen relativ unkritisch. Der Reaktionsansatz wird in den Reaktionsstufen a₁) und a₂) unter Ausnutzung der Exothermie der Polyadditions-Reaktion bis zum Erreichen des berechneten bzw. theoretischen NCO-Gehaltes vorzugsweise bei 60 bis 120 °C, insbesondere bei 80 bis 100 °C, unter Inertgas-Atmosphäre gerührt. Die erforderlichen Reaktionszeiten liegen im Bereich von einigen Stunden und werden durch Reaktions-Parameter wie die Reaktivität der Komponenten, die Stöchiometrie der Komponenten und die Temperatur maßgebend beeinflußt.

Die Umsetzung der Komponenten (A) und (B) in den Reaktionsstufen a₁) und/oder a₂) kann in Gegenwart eines für Polyadditions-Reaktionen an Polyisocyanaten üblichen Katalysators erfolgen. Bei Bedarf erfolgt ein Zusatz dieser Katalysatoren in Mengen von 0,01 bis 1 Gew. % bezogen auf die Komponenten (A) und (B). Gebräuchliche Katalysatoren für Polyadditions-Reaktionen an Polyisocyanate sind bspw. Dibutylzinnoxid, Dibutylzinndilaurat (DBTL), Triethylamin, Zinn(II)-octoat, 1,4-Diaza-bicyclo[2,2,2]octan (DABCO), 1,4-Diaza-bicyclo[3,2,0]-5-nonen (DBN), 1,5-Diaza-bicyclo[5,4,0]-7-undecen (DBU).

Das anionisch modifizierbare Polyurethan-Prepolymer aus Reaktionsstufe a₂) wird in der nachfolgenden Reaktionsstufe a₃) vollständig oder teilweise mit 0 bis 15 Gewichtsteilen einer multifunktionellen Kettenstopper-Komponente (D) zur Reaktion gebracht, wobei jeweils nur eine reaktive Gruppe oder Komponente (D) mit einer Isocyanat-Gruppe des Polyurethan-Preaddukts abreagiert. Die Reaktions-Stufe a₃) wird vorzugsweise bei einer Temperatur von 60 bis 120 °C, insbesondere bei 80 bis 100 °C durchgeführt.

Die Kettenstopper-Komponente (D) enthält oder besteht bevorzugt aus einem Polyol, Polyamin oder Polyaminoalkohol mit drei oder mehreren gegenüber Isocyanat-Gruppen reaktiven Hydroxyl- und/oder primären und/oder sekundären Amino-Gruppen und einer Molekularmasse von 50 bis 500 Dalton, von denen eine mit dem Polyurethan-Preaddukt abreagiert. Als geeignete Kettenstopper-Komponente (D) können beispielsweise Diethanolamin, Trimethylolpropan, Ditrimethylolpropan, Pentaerythrit, Dipentaerythryt, Kohlenhydrate und/oder deren Derivate eingesetzt werden. Bevorzugt werden aliphatische oder cycloaliphatische Polyole und/oder Polyamine und/oder Aminoalkohole eingesetzt und insbesondere Diethanolamin, und/oder Trimethylolpropan.

Die Kettenstopper-Komponente (D) wird in einer solchen Menge zugegeben, daß der Kettenstoppungsgrad bezogen auf die freien Isocyanat-Gruppen des Polyurethan-Prepolymers aus den Komponenten (A) und (B) bei 0 bis 100 Equivalent-%, liegt.

Das funktionalisierte und anionisch modifizierbare Polyurethan-Oligomer oder -Polymer aus Reaktionsstufe a₃), das zwei oder mehrere reaktive Gruppen pro Kettenende und eine Gesamtfunktionalität von ≥ 4 aufweist, wird in der nachfolgenden Reaktionsstufe a₄) mit 0,1 bis 10 Gewichtsteilen einer Neutralisations-Komponente (E) zur teilweisen oder vollständigen Neutralisation der Carbonsäure- und/oder Sulfonsäure-Gruppen zur Reaktion gebracht (direkte Neutralisation). Die Reaktions-Stufe a₄) wird vorzugsweise bei einer Temperatur von 40 bis 65 °C, insbesondere bei ca. 50 °C, durchgeführt.

Die Neutralisations-Komponente (E) enthält oder besteht bevorzugt aus einer oder mehreren Basen, die zur teilweisen oder vollständigen Neutralisation der Carbonsäure- und/oder Sulfonsäure-Gruppen dienen. Sofern die Komponente (A)(iv') bereits in Form ihrer Salze vorliegt, kann auf die Neutralisations-Komponente (E) verzichtet werden. Als geeignete Basen können beispielsweise tertiäre Amine wie N,N-Dimethylethanolamin, N-Methyldiethanolamin, Triethanolamin, N,N-Dimethylisopropanolamin, N-Methyldiisopropanolamin, Triisopropylamin, N-Methylmorpholin, N-Ethylmorpholin, Triethylamin, Ammoniak oder Alkalihydroxide wie Lithiumhydroxid, Natriumhydroxid, Kaliumhydroxid eingesetzt werden. Bevorzugt werden tertiäre Amine und insbesondere Triethylamin eingesetzt.

Die Neutralisations-Komponente (E) wird in einer solchen Menge zugegeben, daß der Neutralisations-Grad bezogen auf die freien Carbonsäure- und/oder Sulfonsäure-Gruppen des Polyurethan-Oligomers oder -Polymers aus den Komponenten (A), (B) und (D) bei 60 bis 100 Equivalent-%, vorzugsweise bei 80 bis 95 Equivalent-%, liegt. Bei der Neutralisation werden aus den Carbonsäure- und/oder Sulfonsäure-Gruppen Carboxylat- und/oder Sulfonat-Gruppen gebildet, die zur anionischen Modifizierung bzw. Stabilisierung der Polyurethan-Dispersion dienen.

Das funktionalisierte und anionisch modifizierte Polyurethan-Oligomer oder- Polymer aus Reaktionsstufe a₄) wird in der nachfolgenden Reaktionsstufe a₅) in 40 bis 120 Gew.-Teilen Wasser, welches noch 0 bis 50 Gew.-Teile einer Formulierungs-Komponente (F) enthalten kann (*in-situ* Formulierung), dispergiert. Die Reaktions-Stufe a₅) wird vorzugsweise bei einer Temperatur von 30 bis 50 °C, insbesondere bei ca. 40 °C, durchgeführt. Bei Bedarf kann das Wasser, welches noch die Formulierungs-Komponente (F) enthalten kann, auch in das multifunktionelle und anionisch modifizierte Polyurethan-Oligomer oder -Polymer dispergiert werden.

Die Reaktionsstufen a₄) und a₅) können auch so zusammengefaßt werden, daß die Komponente (E) dem Wasser vor dem Dispergieren zugesetzt wird (indirekte Neutralisation). Bei Bedarf kann auch eine Kombination aus direkter und indirekter Neutralisation angewendet werden.

Bei der Dispergierung wird das Polyurethan-Prepolymer in das Dispergier-Medium überführt und bildet dabei eine wäßrige Lösung oder Dispersion von ggf. hydroxy- und/oder aminofunktionellen Oligo- oder Polyurethanen aus. Das anionisch modifizierte Polyurethan-Oligomer oder -Polymer bildet dabei entweder Micellen, die an der Oberfläche stabilisierende Carboxylat- und/oder Sulfonat-Gruppen und im Inneren reaktive Isocyanat-Gruppen aufweisen oder liegt gelöst in der wässrigen Phase vor. Alle kationischen Gegen-Ionen zu den anionischen Carboxylat- und/oder Sulfonat-Gruppen sind im Dispergier-Medium gelöst. Die Begriffe "Dispergierung" bzw. "Dispersion" beinhalten, daß neben dispergierten Komponenten mit micellarer Struktur auch solvatisierte und/oder suspendierte Komponenten enthalten sein können.

Der Härtegrad des verwendeten Wassers ist für das Verfahren unerheblich, die Verwendung von destilliertem oder entsalztem Wasser ist daher nicht erforderlich. Hohe Härtegrade bewirken eine weitere Verringerung der Wasseraufnahme der wäßrigen hochvernetzten Zweikomponenten-Polyurethan-Beschichtungssytems, ohne deren Material-Eigenschaften negativ zu beinflussen.

Die Formulierungs-Komponente (F) enthält oder besteht bevorzugt aus Entschäumern, Entlüftern, Gleit- und Verlaufadditiven, strahlenhärtende Additiven, Dispergieradditiven, Substratnetzadditiven, Hydrophobierungsmitteln, Rheologieadditiven wie Polyurethan-Verdicker, Koaleszenzhilfsmitteln, Mattierungsmitteln, Haftvermittlern, Frostschutzmitteln, Antioxidantien, UV-Stabilisatoren, Bakteriziden, Fungiziden, weiteren Polymeren und/oder PolymerDispersionen sowie Füllstoffen, Pigmenten, Mattierungsmitteln oder geeignete Kombination daraus. Die einzelnen Formulierungs-Bestandteile sind dabei als inert zu betrachten

Das ggf. nur teilweise kettengestoppte funktionalisierte und anionisch modifizierte Polyurethan-Oligomer oder-Polymer aus Reaktonsstufe a₅) wird in der anschließenden Reaktionsstufe a₆) mit 0 bis 10 Gewichtsteilen einer Kettenverlängerungs-Komponente (G) zur Reaktion gebracht. Die Reaktionsstufe a₆) wird vorzugsweise bei einer Temperatur von 30 bis 50 °C, insbesondere bei ca. 40 °C, durchgeführt.

Die Reaktionsstufen a₅) und a₆) können auch so zusammengefasst werden, daß die Komponente (G) dem Wasser vor dem Dispergieren zugesetzt wird.

Die Kettenverlängerungs-Komponente (G) enthält oder besteht bevorzugt aus einem Polyamin mit zwei oder mehreren gegenüber Polyisocyanaten reaktiven Amino-Gruppen. Als geeignete Polyamine können beispielsweise Adipinsäuredihydrazid, Ethylendiamin, Diethylentriamin, Triethylentetramin, Tetraethylenpentamin, Pentaethylenhexamin, Dipropylentriamin, Hexamethylendiamin, Hydrazin, Isophorondiamin, N-(2-Aminoethyl)-2-aminoethanol, Addukte aus Salzen der 2-Acrylamido-2-methylpropan-1-sulfonsäure (AMPS^{®}) und Ethylendiamin, Addukte aus Salzen der (Meth)acrylsäure und Ethylendiamin, Addukte aus 1,3-Propansulfon und Ethylendiamin oder beliebige Kombination dieser Polyamine. Bevorzugt werden difunktionelle primäre Amine und insbesondere Ethylendiamin eingesetzt.

Die Kettenverlängerungs-Komponente (G) wird in einer solchen Menge zugegeben, daß der Kettenverlängerungsgrad bezogen auf die freien Isocyanat-Gruppen des Polyurethan-Oligomers oder -Polymers aus den Komponenten (A), (B), (D) und (E) bei 0 bis 95 Equivalent-% liegt. Die Kettenverlängerungs-Komponente (G) kann in vorab entnommenen Anteilen des Wassers im Gewichtsverhältnis 1 : 1 bis 1 : 10 verdünnt werden, um die zusätzliche Exothermie durch die Hydratisierung der Amine zurückzudrängen.

Die (partielle) Kettenverlängerung führt zur Erhöhung der Molekularmasse des Polyurethan-Oligomers bzw. -Polymers. Die Kettenverlängerungs-Komponente (E) reagiert dabei mit reaktiven Isocyanat-Gruppen wesentlich rascher als Wasser. Im Anschluß an die Reaktions-Stufe a₆) werden evtl. noch vorhandene freie Isocyanat-Gruppen mit Wasser vollständig kettenverlängert.

Der Festkörper-Gehalt an Polyurethan-Oligomer oder -Polymer bestehend aus den Komponenten (A), (B), (D), (E) und (G) wird auf 35 bis 60 Gew. %, vorzugsweise 40 bis 50 Gew. % bezogen auf die Gesamtmenge der wäßrigen Bindemittel-Komponente enthaltend oder bevorzugt bestehend aus den Komponenten (A) bis (E) und (G) eingestellt.

Die mittlere Partikelgröße der Mizellen der wässrigen Bindemittel-Komponente enthaltend oder bevorzugt bestehend aus den Komponenten (A) bis (E) und (G) beträgt 10 bis 300 nm.

Die mittlere Molekularmasse des Polyurethan-Oligomers oder -Polymers enthaltend oder bevorzugt bestehend aus den Komponenten (A), (B), (D), (E) und (G) beträgt 2 000 bis 20 000 Dalton.

Der Gehalt an Carboxylat- und/oder Sulfonat-Gruppen des Polyurethan-Oligomers oder-Polymers enthaltend oder bevorzugt bestehend aus den Komponenten (A), (B), (D), (E) und (G) wird auf 10 bis 45 meq.(100 g)⁻¹, vorzugsweise auf 15 bis 30 meq.(100 g)⁻¹ eingestellt.

Die Bindemittelkomponente liegt in Form einer Dispersion oder molekulardispersen Lösung von ggf. hydroxy- und/oder aminofunktionellen Oligo- bzw. Polyurethanen vor, die mit Wasser verdünnbar sind und in einem pH-Bereich von 6 bis 9 liegen. Sie können ggf. noch weitere wasserverdünnbare organische Polyhydroxyverbindungen wie wasserlösliche Alkohole mit mehr als zwei Hydroxylgruppen, wie z. B. Glycerin, Trimethylolpropan, 1,2,3-Butantriol, 1,2,6-Hexantriol, Pentaerythrit oder Zucker enthalten.

Die Stabilisierung dieser Dispersionen oder Lösungen erfolgt durch die Anwesenheit von ionisch hydrophilen Gruppen, wie z.B. Carboxylat-, Sulfonat-, oder anderen hydrophilen Gruppen, die durch vollständige oder teilweise Neutralisation der entsprechenden Säure-Gruppen erhalten werden.

Die Bindemittel-Komponente aus Reaktionsstufe a₅) oder a₆) wird ggf. schließlich in der Reaktionsstufe b) mit der ggf. hydrophil modifizierten Vernetzer-Komponente (H) im Verhältnis 3 : 1 bis 5 : 1 zur Reaktion gebracht, wobei die Vernetzer-Komponente (H) zur Bindemittel-Komponente gegeben wird. Die Reaktionsstufe b) wird vorzugsweise bei einer Temperatur von 20 bis 40 °C, insbesondere bei ca. 20 °C, durchgeführt.

Die Vernetzer-Komponente (H) enthält oder besteht bevorzugt aus wasserdispergierbaren Polyisocyanaten mit aliphatisch und/oder cycloaliphatisch und/oder aromatisch gebundenen Isocyanat-Gruppen, welche 0 bis 20 Gewichtsteile eines organischen Lösemittels enthalten. Die aliphatischen Polyisocyanate sind gegenüber den aromatischen Polyisocyanaten zu bevorzugen. Geeignet sind insbesondere die in Polyurethan-Chemie hinreichend bekannten "Lackpolyisocyanate" auf Basis von Bis-(4-isocyanatocyclo-hexyl)-methan (H₁₂MDI), 1,6-Diisocyanatohexan (HDI), 1-Isocyanato-5-isocyanatomethyl-3,3,5-trimethyl-cyclohexan (IP-DI) oder Kombinationen daraus. Der Begriff "Lackpolyisocyanate" kennzeichnet Allophanat-, Biuret-, Carbodiimid-, Isocyanurat-, Uretdion-, Urethan-Gruppen aufweisende Derivate dieser Diisocyanate, bei denen der Rest-Gehalt an monomeren Diisocyanaten dem Stand der Technik entsprechend auf ein Minimum reduziert wurde. Daneben können auch noch hydrophil modifizierte Polyisocyanate eingesetzt werden, die beispielsweise durch Umsetzung von "Lackpolyisocyanaten" mit Polyethylenglykol zugänglich sind. Als geeignete Polyisocyanate können beispielsweise handelsübliche HDI-Isocyanurate ohne (Handelsname Rhodocoat WT 2102, Fa. Rhodia AG) oder mit hydrophiler Modifizierung (Handelsname Basonat P LR 8878, Fa. BASF AG, Handelsname Desmodur DA bzw. Bayhydur 3100 der Fa. Bayer AG) eingesetzt werden.

Zur Herstellung der dispergierten Polyurethanverbindung ii) wird die Vernetzer-Komponente (H) ("Härter", Teil B) kurz vor dem Emulgieren in die Bindemittel-Komponente aus den Komponenten (A) bis (G) ("Stammlack", Teil A) eingemischt. Um ein problemloses Emulgieren zu erreichen, empfiehlt es sich, die Polyisocyanate mit geringen Mengen organischer Lösemittel wie z.B. Dipropylenglykoldimethylether (Proglyde DMM^{®}), Butyl(di)glykolacetat oder Butylacetat zu verdünnen. Meistens sind einfache Emulgiertechniken beispielsweise mit einem mechanischen Rührwerk (Bohrmaschine mit Rührer) ausreichend, um eine homogene Verteilung der Komponenten zu erreichen. Die Mengen der Bindemittel-Komponente und der Vernetzer-Komponente werden dabei so bemessen, daß das NCO/(OH+NH₍₂₎)-Equivalentverhältnis der Isocyanat-Gruppen der Vernetzer-Komponente und der Hydroxyl-und/oder Amino-Gruppen der Bindemittel-Komponente auf 1,1 bis 1,6 vorzugsweise 1,2 bis 1,4 eingestellt wird.

Von besonderer Bedeutung für die vorliegende Erfindung sind neben der vorstehend beschriebenen Polyurethanverbindung ii) auch noch die Mineralpartikel iii).

In der Regel weist die wäßrige Zubereitung 1 bis 5 Gew. % dispergierte Mineralpartikel iii) auf.

In einer bevorzugten Ausführungsform der Erfindung enthalten die Mineralpartikel iii) zu mindestens 90 Gew. %, bevorzugt zu nahezu 100 Gew. % Zinkoxid. Der Ausdruck zu nahezu 100 Gew. % Zinkoxid soll bedeuten, daß die Mineralpartikel, wenn man von Oberflächenmodifizierungen (siehe nachstehend) und von Verunreinigungen absieht, aus ZnO bestehen.

Mindestens 50 Gew. % der gesamten Metalloxidpartikel iii) haben eine Partikelgröße von maximal 500 nm (Meßnorm für die Bestimmung der Partikelgröße: DIN 53206). Die Gesamtheit der Partikel, die diese Partikelgröße von maximal 500 nm aufweisen, haben in der Regel eine spezifische Oberfläche (bestimmt nach BET-Methode; Norm: DIN 66131) von 10 bis 200 m²/g.

Besonders bevorzugt haben mindestens 70 Gew. %, bevorzugt mindestens 90 Gew. % der gesamten Mineralpartikel iii) eine Partikelgröße von 10 bis 300 nm (Meßnorm für die Bestimmung der Partikelgröße: DIN 53206). Die Gesamtheit der Partikel, die diese Partikelgröße von 10 bis 300 nm aufweisen, haben in der Regel eine spezifische Oberfläche (bestimmt nach BET-Methode; Norm: DIN 66131) von 30 bis 100 m²/g.

Vermutlich resultieren der selbstreinigende, bzw. schmutzabweisende Effekt sowie die fungiziden bzw. herbiziden Eigenschaften der mit der erfindungsgemäßen wäßrigen Zubereitung beschichteten Substratoberflächen zumindest teilweise auf Wechselwirkungen zwischen der Polyurethanverbindung ii) und den Mineralpartikeln iii). Grobkörnige Mineralpartikelzusätze vermitteln häufig gegenüber dem Zusatz der vorstehend beschriebenen feinen Mineralpartikel iii) die besagten Vorteile der Beschichtungen in einem stark abgeschwächten Maß oder überhaupt nicht.

Wie bereits vorstehend erwähnt, werden als Mineralpartikel iii) bevorzugt Teilchen eingesetzt, welche zu nahezu 100 Gew. % Zinkoxid enthalten. Prinzipiell stehen zwei Möglichkeiten zur Synthese derartiger Zinkoxidpartikel/ Zinkoxidpulver zur Verfügung und zwar naßchemische Prozesse sowie Gasphasenprozesse. In der Regel dienen bei den naßchemischen Prozessen solche Zinkverbindungen als Ausgangsmaterial, die thermisch in Zinkoxid überführt werden können, wie Zinkhydroxid, Zinkoxalat oder Zinkcarbonat. Zu den Gasphasenprozessen zählen der sog. französische und der sog. amerikanische Prozeß, nachdem Zinkoxid großtechnisch hergestellt wird. Bei beiden Prozessen erfolgt die Oxidation von Zinkdampf. Diese Verfahren sind jedoch zur Herstellung eines erfindungsgemäß geeigneten Zinkpulvers nur begrenzt geeignet, da z.B. die gewünschten spezifischen Oberflächen (BET-Werte) nicht regelmäßig erzielt werden. Ein besonders geeignetes Verfahren zur Herstellung eines erfindungsgemäß geeigneten Zinkpulvers basiert darauf, daß Zinkpulver in vier aufeinanderfolgenden Reaktionszonen, Verdampfungszone, Nukleierungszone, Oxidationszone und Quenchzone, in Zinkoxidpulver überführt wird,
- wobei in der Verdampfungszone das dorthin mittels eines Inertgasstromes geführte Zinkpulver in einer Flamme aus Luft und/oder Sauerstoff und einem Brenngas, bevorzugt Wasserstoff, verdampft wird unter der Maßgabe daß die Reaktionsparameter so gewählt sind, daß keine Oxidation des Zinks eintritt,
- und wobei in der Nucleirungszone, in die das heiße Reaktionsgemisch aus der Verdampfungszone, enthaltend oder bevorzugt bestehend aus Zinkdampf, Wasserdampf als Reaktionsprodukt der Flammreaktion und gegebenenfalls überschüssigem Brenngas, gelangt auf Temperaturen unterhalb des Siedepunktes von Zink abkühlt oder mittels eines Inertgases abgekühlt wird,
- und wobei in der Oxidationszone das Gemisch aus der Nucleirungszone mit Luft und/oder Sauerstoff oxidiert wird,
- und wobei in der Quenchzone das Oxidationsgemisch durch Zugabe von Kühlgas (zum Beispiel Stickstoff, Luft, Argon, Kohlendioxid) auf Temperaturen von weniger als 400°C abgekühlt wird.

Das Verfahren kann so durchgeführt werden, daß in der Verdampfungszone ein Überschuß an Brenngas eingesetzt wird, ausgedrückt in lambda-Werten von 0,5 bis 0,99, bevorzugt von 0,8 bis 0,95.

Das Verfahren kann so durchgeführt werden, daß die Temperatur in der Verdampfungszone bevorzugt zwischen 920 °C und 2000°C liegt. In der Nucleirungszone kann die Temperatur bevorzugt zwischen 500°C und 900°C, besonders bevorzugt zwischen 700°C und 800°C, liegen.

### Weiterhin kann die Abkühlrate

- in der Nucleirungszone bevorzugt zwischen 100 Kelvin/Sekunde und 10000 Kelvin/Sekunde, besonders bevorzugt zwischen 2000 Kelvin/Sekunde und 3000 Kelvin/Sekunde betragen und
- in der Quenchzone kann die Abkühlrate bevorzugt zwischen 1000 Kelvin/Sekunde und 50000 Kelvin/Sekunde, besonders bevorzugt zwischen 5000 Kelvin/Sekunde und 15000 Kelvin/Sekunde, betragen.

Die Verweilzeit des Reaktionsgemisches in der
- Verdampfungszone kann bevorzugt zwischen 0,1 Sekunden und 4 Sekunden, bevorzugt zwischen 0,5 Sekunden und 2 Sekunden,
- in der Nucleirungszone zwischen 0,05 Sekunden und 1,00 Sekunden, bevorzugt zwischen 0,1 Sekunden und 0,2 Sekunden,
- in der Oxidationszone zwischen 5 Millisekunden und 200 Millisekunden, bevorzugt zwischen 10 Millisekunden und 30 Millisekunden,
- und in der Quenchzone zwischen 0,05 Sekunden und 1,00 Sekunden, bevorzugt zwischen 0,1 Sekunden und 0,2 Sekunden, liegen.

Das Verfahren kann auch so durchgeführt werden, daß Luft und/oder Sauerstoff und daß Brenngas an einer oder mehreren Stellen innerhalb der Verdampfungszone zugeführt werden können.

Die Abtrennung des Zinkoxidpulvers vom Gasstrom kann mittels Filter, Zyklon, Wäscher oder anderen geeigneten Abscheidern erfolgen.

Gegenüber dem Stand der Technik, der bei pyrogenen Verfahren stets von der Oxidation von Zinkdampf ausgeht, wird beim erfindungsgemäßen Verfahren der Zinkdampf vor der Oxidation unter den Siedepunkt des Zinkes abgekühlt. Dadurch kommt es zu einer Nucleirung, einer Bildung von Zinkkristalliten. Der Mechanismus dieser Bildung und die Struktur der Kristallite ist nicht geklärt. Durch Variation der Prozessparameter, wie zum Beispiel Abkühlraten, Verweilzeiten und/oder Temperaturen kann die Morphologie des Zinkpulvers variiert werden.

Ein auf die vorstehend beschriebe Weise hergestelltes Zinkoxidpulver ist normalerweise für den Einsatz in der erfindungsgemäßen Zubereitung gut geeignet. Die Partikel dieses Zinkoxidpulvers liegen in der Regel in Form von Aggregaten von anisotopen Primärpartikeln vor. Unter anisotrop ist zu verstehen, daß die Anordnung der Atome entlang der drei Raumachsen unterschiedlich ist. Als anisotrope Primärpartikel sind zum Beispiel solche zu verstehen, die nadelförmig, knollenförmig oder plättchenförmig sind. Insbesondere können die Aggregate aus einem Gemisch aus knollenförmigen Primärpartikeln und nadelförmigen Primärpartikeln vorliegen, wobei das Verhältnis von knollenförmigen/ nadelförmigen Primärpartikeln zwischen 99:1 bis 1:99 liegen kann. Die knollenförmigen Primärpartikel des Zinkoxides weisen bevorzugt einen mittleren Durchmesser von 10 bis 50 nm auf und die nadelförmigen Primärpartikel weisen bevorzugt eine Länge von 100 nm bis 2000 nm, eine Breite von 10 nm bis 100 nm auf. Die Aggregate des Zinkoxidpulvers können eine weitestgehend anisotrope Struktur, definiert über einen Formfaktor F(Circle) von kleiner als 0.5, aufweisen. Die Größe F(Circle) beschreibt die Abweichung eines Aggregates von einer idealen Kreisform. F(Circle) ist gleich 1 für ein ideales kreisförmiges Objekt. Je kleiner der Wert, desto weiter ist die Struktur des Objektes von der idealen Kreisform entfernt. Die Definition des Parameters erfolgt gemäß ASTM 3849-89. Das Zinkoxidpulver kann an seiner Oberfläche eine Sauerstoffkonzentration als nicht desorbierbare Feuchtigkeit in Form von Zn-OH und/oder Zn-OH2-Einheiten von wenigstens 40% aufweisen. Die Bestimmung erfolgt durch XPS-Analyse (XPS = Röntgen-Photoelektronen-Spektroskopie) der Sauerstoffsignale bei 532 bis 533 eV und 534 bis 535 eV. Die Schüttdichte des Zinkoxidpulvers beträgt meist 40 bis 120 g/l.

Anstelle von den vorstehend beschriebenen nicht-modifizierten Zinkoxidpartikeln kann die erfindungsgemäße wäßrige Zubereitung auch oberflächenmodifizierte, insbesondere hydrophobierte Zinkoxydpartikel enthalten.

Zur Hydrophobierung des Zinkoxides können beispielsweise folgende Verbindungen eingesetzt werden:
a) Organosilane der Art
   (RO)₃Si(CₙH₂ₙ₊₁) und (RO)₃Si(CₙH₂ₙ₋₁) mit
   R = Alkyl, wie beispielsweise Methyl-, Ethyl-, n-
   Propyl-, i-Propyl-, Butyl-; n = 1 - 20
b) Organosilane der Art
   R'ₓ(RO)_{y}Si(CₙH₂ₙ₊₁) und R'ₓ(RO)_{y}Si(CₙH₂ₙ₋₁) mit
   R = Alkyl, beispielsweise Methyl-, Ethyl-,
   n-Propyl-, i-Propyl-, Butyl-
   R' = Alkyl, beispielsweise Methyl-, Ethyl-,
   n-Propyl-, i-Propyl-, Butyl-, Cycloalkyl;
   n = 1 - 20; x+y = 3; x = 1,2; y= 1,2;
c) Halogenorganosilane der Art
   X₃Si(CₙH₂ₙ₊₁) und X₃Si(CₙH₂ₙ₋₁) mit
   X= Cl, Br; n= 1 -20
d) Halogenorganosilane der Art
   X₂(R')Si(CₙH₂ₙ₊₁) und X₂(R')Si(CₙH₂ₙ₋₁)
   X = Cl, Br; R' = Alkyl, beispielsweise Methyl-, Ethyl-,
   n-Propyl-, i-Propyl-, Butyl-, Cycloalkyl; n = 1 - 20
e) Halogenorganosilane der Art
   X(R')₂Si(CₙH₂ₙ₊₁) und X(R')₂Si(CₙH₂ₙ₋₁)
   X = Cl, Br; R' = Alkyl, beispielsweise Methyl-, Ethyl-,
   n-Propyl-, i-Propyl-, Butyl-, Cycloalkyl; n = 1 - 20
f) Organosilane der Art (RO)₃Si(CH₂)ₘ-R' mit
   R = Alkyl, beispielsweise Methyl-, Ethyl-,
   n-Propyl-, i-Propyl-, Butyl-, Cycloalkyl; m = 0,1-20;
   R' = Methyl-, Aryl (zum Beispiel -C₆H₅, substituierte Phenylradikale), -C₄F₉, OCF₂-CHF-CF₃, -C₆F₁₃,-O-CF₂-CHF₂, -NH₂, -N₃, -SCN, -CH=CH₂, -NH-CH₂-CH₂-NH₂,-N-(CH₂-CH₂-NH₂)₂, -OOC(CH₃)C=CH₂, -OCH₂-CH(O)CH₂, -NH-CO-N-CO-(CH₂)₅,-NH-COO-CH₃, -NH-COO-CH₂-CH₃, -NH-(CH₂)₃Si(OR)₃,
   -Sₓ-(CH₂)₃Si(OR)₃, -SH, -NR'R"R'" (R' = Alkyl, Aryl; R" = H, Alkyl, Aryl; R'" = H, Alkyl, Aryl, Benzyl, C₂H₄NR"" R""' mit R"" = H, Alkyl und R""'=H, Alkyl)
g) Organosilane der Art (R")ₓ(RO)_{y}Si(CH₂)ₘ-R' mit
   R"= Alkyl,Cycloalkyl; x+y=2; x=1,2; y=1,2; m=0,1 bis 20
   R' = Methyl-, Aryl (zum Beispiel -C₆H₅ , substituierte Phenylradikale), -C₄F₉,-OCF₂-CHF-CF₃, -C₆F₁₃, -O-CF₂-CHF₂, -NH₂, -N₃, -SCN, -CH=CH₂, -NH-CH₂-CH₂-NH₂,
   -N-(CH₂-CH₂-NH₂)₂, -OOC(CH₃)C=CH₂, -OCH₂-CH(O)CH₂,
   -NH-CO-N-CO-(CH₂)₅, -NH-COO-CH₃, -NH-COO-CH₂-CH₃, -NH-(CH₂)₃Si(OR)₃,-S_{X}-(CH₂)₃Si(OR)₃, -SH, - NR'R"R"' (R' = Alkyl, Aryl; R" = H, Alkyl, Aryl; R"' = H, Alkyl, Aryl, Benzyl; C₂H₄NR"" R""' mit R"" = H, Alkyl und R""'= H, Alkyl)
h) Halogenorganosilane der Art X₃Si(CH₂)ₘ-R' mit
   X = Cl, Br; m = 0,1 - 20;
   R' = Methyl-, Aryl (zum Beispiel -C₆H₅, substituierte Phenylradikale), -C₄F₉, -
   OCF₂-CHF-CF₃, -C₆F₁₃,
   -O-CF₂-CHF₂, -NH₂, -N₃, -SCN, -CH=CH₂, -NH-CH₂-CH₂-NH₂,
   -N-(CH₂-CH₂-NH₂)₂, -OOC(CH₃)C=CH₂, -OCH₂-CH(O)CH₂,
   -NH-CO-N-CO-(CH₂)₅, -NH-COO-CH₃, -NH-COO-CH₂-CH₃,
   -NH-(CH₂)₃Si(OR)₃, -Sₓ-(CH₂)₃Si(OR)₃, -SH
i) Halogenorganosilane der Art (R)X₂Si(CH₂)ₘ-R' mit
   X = Cl, Br; R = Alkyl, zum Beispiel Methyl,- Ethyl-, Propyl-, Butyl; m = 0,1 - 20; R'
   = Methyl-, Aryl (e.g. -C₆H₅, (zum Beispiel -C₆H₅, substituierte Phenylradikale), -C₄F₉, -OCF₂-CHF-CF₃, -C₆F₁₃, -O-CF₂-CHF₂,-NH₂, -N₃, -SCN, -CH=CH₂, -NH-CH₂-CH₂-NH₂,
   -N-(CH₂-CH₂-NH₂)₂, -OOC(CH₃)C = CH₂, -OCH₂-CH(O)CH₂,
   -NH-CO-N-CO-(CH₂)₅, -NH-COO-CH₃, -NH-COO-CH₂-CH₃,
   -NH-(CH₂)₃Si(OR)₃, wobei R = Methyl-, Ethyl-, Propyl-, Butyl-; -Sₓ-(CH₂)₃Si(OR)₃, wobei R = Methyl-, Ethyl-, Propyl-, Butyl-; -SH
j) Halogenorganosilane der Art (R)₂X Si(CH₂)ₘ-R' mit
   X = Cl, Br; R = alkyl; m = 0,1 - 20
   R' = Methyl-, Aryl (zum Beispiel -C₆H₅, substitutierte Phenylradikale),-C₄F₉,-OCF₂-CHF-CF₃, -C₆F₁₃, -O-CF₂-CHF₂, -NH₂,-N₃, SCN, -CH=CH₂, -NH-CH₂-CH₂-NH₂, -N-(CH₂-CH₂-NH₂)₂, -OOC(CH₃)C = CH₂, -OCH₂-CH(O)CH₂, -NH-CO-N-CO-(CH₂)₅, -NH-COO-CH₃, -NH-COO-CH₂-CH₃, -NH-(CH₂)₃Si(OR)₃, -Sₓ-(CH₂)₃Si(OR)₃, -SH, oder
k) Silazane der Art R'R₂Si-NH-SiR₂R'
   R = R' = alkyl, vinyl, aryl.

Das hydrophobierte Zinkoxidpulver weist typischerweise einen Kohlenstoffgehalt von 0,5 bis 1,0 Gew. % auf.

Die Herstellung des hydrophobierten Zinkoxidpulvers erfolgt normalerweise durch Aufsprühen des oberflächenmodifizierenden Stoffes auf das Zinkoxidpulver, welches gegebenenfalls mit Wasser besprüht wurde - und zwar bei Raumtemperatur und einer nachfolgenden Hitzebehandlung bei 50 bis 400°C über einen Zeitraum von 1 bis 6 Stunden.

Alternativ erfolgt die Herstellung dadurch, daß das Zinkoxidpulver, welches zuvor gegebenenfalls mit Wasser besprüht wurde, mit den Dämpfen des oberflächenmodifizierenden Stoffes behandelt wird und das Gemisch anschließend einer Hitzebehandlung bei 50 bis 800°C über einen Zeitraum von 0,5 bis 6 Stunden unterwirft.

Ein geeignetes Zinkoxidpulver weist normalerweise einen Anteil an Blei von höchstens 20 ppm, an Arsen von höchstens 3 ppm, an Cadmium von höchstens 15 ppm, an Eisen von höchstens 200 ppm, an Antimon von höchstens 1 ppm und an Quecksilber von höchstens 1 ppm auf.

In einem Dispergierungsverfahren wird das Zinkoxidpulver mittels hohem Energieeintrag (z.B. durch Rühren) in Wasser oder in eine Dispersion (z.B. in Polymerdispersion) eingebracht. Ein hoher Energieeintrag ist notwendig, um Zinkoxidpartikel der erfindungsgemäßen Feinheit in Wasser bzw. in der Dispersion zu erhalten.
Geeignete Dispergiervorrichtungen, die einen hohen Energieeintrag bewirken, können Rotor-Stator-Maschinen, Planetenkneter, Ultraschallvorrichtungen oder Hochdruckhomogenisatoren, beispielsweise ein Nanomizer®- oder ein Ultimizer®-System, sein.

In einer bevorzugten Ausführungsform der Erfindung enthält die wäßrige Zubereitung 5 bis 50, bevorzugt 10 bis 30 Gew. %, der in dispergierter Form vorliegenden Polymerkomponente iv).

Die Polymerkomponente iv) kann beispielsweise Polyacrylate, Polymethacrylate, Polystyrol, Polyvinylacetat, Polyurethane, Polyalkyde, Polyepoxide, Polysiloxane, Polyarylonitrile und/oder Polyester aufweisen und enthält jedoch bevorzugt Homo- und Co-Polymer, welches Methacrylat- und/ oder Acrylat-Struktureinheiten aufweist. Als besonders geeignet erweisen sich Styrol/ Alkylacrylat-Copolymere.

Zweckmäßigerweise liegt die eingesetzte Polymerkomponente iv) entweder als Suspensions-oder bevorzugt als Emulsionspolymerisat vor.

Die Polymerkomponente iv) verbessert im allgemeinen die mechanischen Eigenschaften sowie die Haftungseigenschaften der mit der erfindungsgemäßen wäßrigen Zubereitung hergestellten Beschichtung. Der Zusatz der Polymerkomponente iv) ist zwar in der Regel vorteilhaft, jedoch erfindungsgemäß nicht zwangsweise notwendig.

Häufig enthält die wäßrige Zubereitung neben den vorstehend erwähnten Komponenten zusätzlich noch UV-Stabilisitatoren auf der Basis von Aminen, synthetische Eisenoxidpigmente, Entschäumer, Benetzungsmittel und/ oder Verlaufsmittel.

Weiterhin kann die erfindungsgemäße wäßrige Zubereitung noch zusätzlich Verbindungen zur Veränderung der Rheologie enthalten. Dies sind z.B. Polyurethanverdicker oder Siliziumdioxid enthaltende Füllstoffe, wobei pyrogen hergestelltes Siliziumdioxid besonders geeignet ist. Außerdem kann die erfindungsgemäße wäßrige Zubereitung noch zusätzlich organische Lösungsmittel wie Ethanol, Buthylacetat, Ethylacetat, Aceton, Butanol, Tetrahydrofuran, Alkane oder Mischungen aus zwei oder mehreren dieser genannten Stoffe enthalten.

Die erfindungsgemäße wäßrige Zubereitung wird in der Regel so hergestellt, daß die bereits die in Wasser dispergierte Polyurethanverbindung ii) oder eine Mischung aus der in Wasser dispergierten Polyurethanverbindung ii) und der in Wasser dispergierten Polymerkomponente iv) mit einem Pulver der Mineralpartikel iii) versetzt wird. Anschließend wird das Mineralpartikelpulver mittels hohem Energieeintrag unter dispergierenden Bedingungen (z.B. durch starkes Rühren) in das flüssige Medium bzw. in die Dispersion eingebracht.

Die vorliegende Erfindung betrifft weiterhin die Verwendung der wäßrigen Zubereitung zur Beschichtung von mineralischen Materialien, Kunststoffen und Metallen, wobei die Beschichtung von mineralischen Materialien, insbesondere mineralischen Dachziegeln, im Vordergrund steht.

Ein weiterer Gegenstand der vorliegenden Erfindung ist ein Verfahren zur Beschichtung eines Substrats mit der vorstehend beschriebenen Zubereitung, wobei die Zubereitung 20 bis 500 µm dick auf das Substrat aufgetragen wird und anschließend das Substrat einem Trockungsprozeß ausgesetzt wird. Die Applikation der erfindungsgemäßen wäßrigen Zubereitung erfolgt mit den aus der Lacktechnologie bekannten Methoden, wie z.B. Fluten,

Gießen, Rakeln, Rollen, Spritzen, Streichen, Tauchen und/ oder Walzen. Der Trocknungsprozeß ist als Aushärtungsprozeß anzusehen und erfolgt im allgemeinen bei Temperaturen im Bereich von 5 bis 40 °C, d.h. ohne spezielles Erhitzen der Beschichtung. Die Trocknung bei höheren Temperaturen, von z.B. 40 bis 100 °C ist jedoch prinzipiell auch möglich.

Schließlich betrifft die vorliegende Erfindung auch ein beschichtetes Substrat, welches nach dem vorstehend beschriebenen Verfahren hergestellt worden ist. Dieses Substrat liegt bevorzugt in Form eines beschichteten mineralischen Dachziegels vor.

Im folgenden soll die vorliegende Erfindung anhand von Beispielen näher erläutert werden.

### Beispiel 1: (Vergleich)

### - Wässriges fluormodifiziertes Polyurethan Beschichtungssystem

Unter mechanischem Rühren werden bei Raumtemperatur zunächst Leitungswasser und anschließend die fluormodifizierte Polyurethan-Dispersion X (alternativ könnte z.B. auch das im Handel erhältliche Produkt "Smart Protect® P 1010" der Degussa AG eingesetzt werden) in einen Rührbehälter gegeben. Anschließend werden die Buntpigmentpasten (Colanyl® Oxide Gelb und Rot, der Clariant GmbH) hinzugegeben und der enstehende Slurry ungefähr 10-15 min. mit hoher Geschwindigkeit (z.B. 800 Umdrehungen/min.) dispergiert. Danach wird der Polyurethan Verdicker (Acrysol® RM 8, von Rohm&Haas) zugegeben, um die Verarbeitungsviskosität einzustellen.

### Beispiel 2:

### - Wässriges fluormodifiziertes Polyurethan Beschichtungssystem mit ZnO Komponente

Unter mechanischem Rühren werden bei Raumtemperatur zunächst Leitungswasser und anschließend die fluormodifizierte Polyurethan-Dispersion X (alternativ könnte z.B. auch das im Handel erhältliche Produkt "Smart Protect® P 1010" der Degussa AG eingesetzt werden) in einen Rührbehälter gegeben. Anschließend werden die Buntpigmentpasten (Colanyl® Oxide Gelb und Rot, der Clariant GmbH) sowie die ZnO-Paste hinzugegeben und der enstehende Slurry ungefähr 10-15 min. mit hoher Geschwindigkeit (z.B. 800 Umdrehungen/min.) dispergiert. Danach wird der Polyurethan Verdicker (Acrysol® RM 8, von Rohm&Haas) zugegeben, um die Verarbeitungsviskosität einzustellen.

### Beispiel 3: (Vergleich)

### - Wässriges fluormodifiziertes Polyurethan/Acryl Beschichtungssystem

Unter mechanischem Rühren werden bei Raumtemperatur zunächst Leitungswasser und anschließend die fluormodifizierte Polyurethan-Dispersion X (alternativ könnte z.B. auch das im Handel erhältliche Produkt "Smart Protect® P 1010" der Degussa AG eingesetzt werden) sowie eine wäßrige Styrol/Acrylat-Copolymer Dispersion (Acronal® 290 D der BASF AG) in einen Rührbehälter gegeben. Anschließend werden die Buntpigmentpasten (Colanyl® Oxide Gelb und Rot, der Clariant GmbH) hinzugegeben und der enstehende Slurry ungefähr 10-15 min. mit hoher Geschwindigkeit (z.B. 800 Umdrehungen/min.) dispergiert. Danach wird der Polyurethan Verdicker (Acrysol® RM 8, von Rohm&Haas) zugegeben, um die Verarbeitungsviskosität einzustellen.

### Beispiel 4:

### - Wässriges fluormodifiziertes Polyurethan/Acryl Beschichtungssystem mit ZnO Komponente

Unter mechanischem Rühren werden bei Raumtemperatur zunächst Leitungswasser und anschließend die fluormodifizierte Polyurethan-Dispersion X (alternativ könnte z.B. auch das im Handel erhältliche Produkt "Smart Protect® P 1010" der Degussa AG eingesetzt werden) sowie eine wäßrige Styrol/Acrylat-Copolymer Dispersion (Acronal® 290 D der BASF AG) in einen Rührbehälter gegeben. Anschließend werden die Buntpigmentpasten (Colanyl® Oxide Gelb und Rot, der Clariant GmbH) sowie die ZnO-Paste hinzugegeben und der enstehende Slurry ungefähr 10-15 min. mit hoher Geschwindigkeit (z.B. 800 Umdrehungen/min.) dispergiert. Danach wird der Polyurethan Verdicker (Acrysol® RM 8, von Rohm&Haas) zugegeben, um die Verarbeitungsviskosität einzustellen.

| Rohstoff | Menge (Gew. %) | | | |
|---|---|---|---|---|
| | Beispiel 1 | Beispiel 2 | Beispiel 3 | Beispiel 4 |
| Fluorpolyurethan Dispersion | 70,00 | 70,00 | 35,00 | 35,00 |
| Styrol Acrylat Dispersion | 0,00 | 0,00 | 35,00 | 35,00 |
| Polyurethan Verdicker | 1,00 | 1,00 | 1,00 | 1,00 |
| Zinkoxid Paste (50%ig) | 0,00 | 2,00 | 0,00 | 2,00 |
| Eisenoxidgelb Pigment Paste | 3,00 | 3,00 | 3,00 | 3,00 |
| Eisenoxidrot Pigment Paste | 4,50 | 4,50 | 4,50 | 4,50 |
| Leitungswasser | 21,50 | 19,50 | 21,50 | 19,50 |
| | | | | |
| Eigenschaften | Beispiel 1 | Beispiel 2 | Beispiel 3 | Beispiel 4 |
| Haftung | GT 1 | GT 1 | GT 1 | GT 1 |
| Ausblühungen | nA | nA | Keine | Keine |
| Algen Resistanze | nA | i. O. | nA | i. O. |
| UV Beständigkeit | nA | i. O. | nA | i. O. |

| | | | | |
|---|---|---|---|---|
| GT 1 = Gemäß DIN 18555-6 NA = nicht Ausreichend I.O. = In Ordnung | | | | |

### Zu den vorstehend genannten Ausgangsprodukten der Beschichtungszubereitungen

### Herstellung der fluormodifizierten Polyurethan-Dispersion X (enthält dispergierte fluorierte Polyurethanverbindung)

### - Schritt 1: Herstellung des Vorprodukts fluormodifizierte Diolkomponente:

In einem Vierhalskolben ausgerüstet mit KPG-Rührer, Rückflußkühler, Innenthermometer und Stickstoff-Deckung wurden 155,82 g Isophorondiisocyanat (IPDI) (Vestanat^{®} IPDI, Fa. Degussa AG) unter Stickstoff-Deckung vorgelegt. Nach Zugabe von 0,06 g Dibutylzinndilaureat (DBTL) als Katalysator wurde unter Kühlung innerhalb von ca. 1 Stunde 270,00 g Fluoralkohol (Zonyl^{®} BA LD, Fa. Du Pont de Nemours) langsam zugetropft. Nach Beendigung des Zutropfens wurde der Ansatz eine Stunde bei gleicher Temperatur nachgerührt bis der theoretische NCO-Gehalt erreicht wurde.
405,88 g des Preadduktes wurden anschließend unter Kühlung zu 70,22 g Diethanolamin (DEA) in 119,02 g g N-Ethylpyrrolidon (NEP) langsam zugetropft.

### Feststoffgehalt: 80 Gew.-%

### - Schritt 2: Herstellung der fluormodifizierten Polyurethan-Dispersion X als solches:

In einem Vierhalskolben ausgerüstet mit KPG-Rührer, Rückflußkühler, Thermometer und Stickstoff-Deckung wurde ein Gemisch aus der fluormodifizierten Diolkomponente, resultierend aus Schritt 1 und Isophorondiisocyanat (Vestanat^{®} IPDI, Fa. Degussa AG) in Gegenwart von Dibutylzinndilaureat (DBTL) als Katalysator unter Stickstoff-Deckung 1,5 h bei 80 - 90 °C gerührt. Nach Zugabe der Dimethylolpropionsäure (DMPA), des Polycarbonatdiols mit einer Hydroxyl-Zahl von 56 mg KOH·g⁻¹ (Desmophen^{®} C 1200, Fa. Bayer AG) und des N-Methylpyrrolidons (NMP) zum Preaddukt wurde die Mischung unter Stickstoff-Deckung ca. 2 h bei 80 - 90 °C weiter gerührt, bis der berechnete NCO-Gehalt erreicht wurde. Der Verlauf der Reaktion wurde acidimetrisch verfolgt.
Das Prepolymer wurde dann unter intensivem Rühren in Wasser, versetzt mit Triethylamin (TEA) (indirekte Neutralisation), dispergiert und anschließend mit Ethylendiamin (50%ige wässrige Lösung) kettenverlängert.

Es wurde eine stabile Fluorpolyurethan-Dispersionen erhalten.

| Komponente | Edukte | |
|---|---|---|
| 1 | Polycarbonatdiol Desmophen C 1200 | 120,0 g |
| 2 | Isophorondiisocyanat (IPDI) | 61,7 g |
| 3 | Dibutylzinndilaurat (DBTL) | 0,1 g |
| 4 | 1,4-Butandiol (BD14) | 2,1 g |
| 5 | Dimethylolpropionsäure (DMPA) | 5,6 g |
| 6 | Fluormod. Diolkomponente aus Beispiel 1 | 17,3 g |
| 7 | N-Ethylpyrrolidon (NEP) | 30,0 g |
| 8 | Triethylamin (TEA) | 4,1 g |
| 9 | Prepolymer | 200,0 g |
| 10 | Wasser | 191,0 g |
| 11 | Ethylendiamin (EDA, 50 % in Wasser) | 9,6 g |

### Eisenoxidgelb Pigmentpaste: Colanyl Oxide® Yellow R 131:

Colanyl Oxide Yellow R 131 ist eine bindemittelfreie, wäßrige Pigmentzubereitung, welche auf einem nicht ionischen und/oder anionischen Dispergiermittel und Propylenglykol basiert. Auf Grund der besonders guten Witterungsfestigkeit des Eisenoxidpigments ist es für Innen-und Außenanwendungen verwendbar.

### Eisenoxidrot Pigmentpaste: Colanyl Oxide® Red B 130:

Colanyl Oxide Red B 130 ist eine bindemittelfreie, wäßrige Pigmentzubereitung, welche auf einem nicht ionischen und/oder anionischen Dispergiermittel und Propylenglykol basiert. Auf Grund der besonders guten Witterungsfestigkeit des Eisenoxidpigments ist es für Innen-und Außenanwendungen verwendbar.

### Polyurethon Verdicker: ACRYSOL1 ® RM-8

Dies ist eine Propylenglykol und Wasser enthaltende Lösung.

### Styrol Acrylat Dispension: Acronal® 290 D

Dies ist eine wässrige Dispersion eines Copolymers aus Butylacrylat und Styrol.

### Herstellung der ZnO-Paste

Mittels eines mechanischen Rührers wird bei Raumtemperatur in zuvor vorgelegtes Wasser ein Netzmittel (auf Basis eines Polyethersiloxan-Copolymers) untergerührt. Danach werden die ZnO Partikel in Form des nachstehend beschriebenen Pulvers (VP AdNano® ZnO 20) hinzugegeben. Der formulierte Slurry wird dann für 10-15 min. mit hoher Geschwindigkeit (z.B 800 Umdrehungen/min.) dispergiert, wobei ein Entschäumer (auf Basis eines kieselsäurehaltigen Polyethersiloxan-Copolymers) hinzugegeben wird. Anschließend wird die entstandene ZnO-Paste mittels einer Perlmühle 15-20 min. gemahlen.

### Eingesetztes Zinkoxidpulver VP AdNano® ZnO 20 (Hersteller Degussa AG)

| | **EINHEIT** | **ERGEBNIS** | Richtwert |
|---|---|---|---|
| BET-Oberfläche | m2/g | 22 | >= 20 |
| pH-Wert, 4% in Wasser | | 8,0 | 6,5 - 8,0 |
| Stampfdichte | g/l | 109 | >= 90 |
| d50, PCS, Ultra-Schall | nm | 137 | |
| d90, PCS, Ultra-Schall | nm | 225 | |

Die bestimmten Parameter wurden an einer willkürlich gezogenen VP AdNano® ZnO 20 Probe bestimmt. Die BET-Oberfläche wurde am Pulver nach DIN 66131 und die Teilchengröße nach Dispergieren in Wasser mit Ultraschall mit PCS (Photononenkorrelationsspektroskopie) nach DIN 53206 bestimmt. d90 bedeutet dabei, dass 90-Gew.-% der Partikel kleiner sind als die angegebenen nm.

### - Beispiele 1 bis 4 mit Labor-Prüfergebnissen der Haftung

### - Prüfmethode: DIN 18555-6 und DIN EN ISO 246 24

Es wurden 4 Betonproben, die vorher mit einem herkömmlichen Grundierungsmittel (z.B. "Relius Oldopox W") behandelt worden sind, mit den oben genannten Beschichtungs-Zubereitungen jeweils zweimal beschichtet. Nach einer Trocknungszeit von zwölf Stunden wurden die Haftungsversuche durchgeführt. Alle Beispiele mit den Beschichtungszubereitungen zeigen eine gute Haftung zu den Betonproben.

### - Beispiel 1 bis 4 mit Labor-Prüfergebnissen der Ausblühungen.

### Prüfmethode: Siehe Nachfolgende Beschreibung

Es wurden 4 Betonproben, die vorher mit einem herkömmlichen Grundierungsmittel (z.B. "Relius Oldopox W") behandelt worden sind, mit den oben genannten Beschichtungszubereitungen jeweils zweimal beschichtet. Nach einer Trocknungszeit von zwölf Stunden wurden die Proben für 168 stunden kopfüber in ein 60°C heißes Wasserbad gelegt. Bei Versuchsende wurden die Proben visuell auf Efflorescence-Erscheinungen beurteilt. Die Beschichtungen gemäß der Beispiele 3 und 4 zeigen im Gegensatz zu denen gemäß der Beispiele 1 und 2 keinerlei Ausblühungen. Ebenfalls zeigten die Beschichtungen gemäß der Beispiele 3 und 4 keine nennenswerten Filmbeschädigungen (wie Aufweichung oder Blasenbildung).

### - Beispiel 1 bis 4 mit Labor-Prüfergebnissen der Algenresistence

### Prüfmethode: ASTM D 5589-97 (2002) und ASTM D 5590-00

Es wurde nach vorstehend genannten Prüfmethoden Beschichtungen gemäß der 4 Beispiele getestet und die Beschichtungszubereitung wie folgt beurteilt: Beschichtungen gemäß der Beispiele 2 und 4 zeigen ein deutlich geringeres Algenwachstum als die gemäß der Beispiele 1 und 3.

### - Beispiel 1 bis 4 mit Labor-Prüfergebnissen der UV-Beständigkeit

### Prüfmethode: QUV UV-B 313: ISO 11507, ASTM D 4857

Es wurden 4 Betonproben, die vorher mit "Relius Oldopox W" grundiert worden sind, mit den oben genannten Beschichtungs-Zubereitungen zweimal beschichtet. Nach einer Trocknungszeit von zwölf Stunden wurden die Proben der Prüfung ausgesetzt. Nach einer Prüfzeit von mindestens 1000 bis 6000 Stunden wurden die Proben mit den Beschichtungs-Zubereitungen visuell auf Farbtonveränderungen, Polymerabbau, Rissbildung, Glanzverlust und Haftung beurteilt. Die Beschichtungen gemäß der Beispiel 2 und 4 zeigen insgesamt ein besseres Bewitterungsverhalten als die gemäß der Beispiele 1 und 3.

## Patentansprüche

1. Wässrige Zubereitung zur Beschichtung von Substratoberflächen, enthaltend
i) 20 bis 80 Gew. % Wasser,
ii) 10 bis 75 Gew. % einer in dispergierter Form vorliegenden Polyurethanverbindung,
iii) 0,5 bis 30 Gew. % dispergierte Mineralpartikel und
iv) 0 bis 50 Gew. % einer in dispergierter Form vorliegenden, sich von der Polyurethanverbindung ii) unterscheidenden Polymerkomponente, die in Form von Co- oder Homopolymeren oder Mischungen davon vorliegt,
wobei
die Polyurethanverbindung ii) gemäß einer Urethan-Bindung verknüpfte Polyol- und Isocyanatstruktureinheiten aufweist, 1 bis 50, bevorzugt 3 bis 10 Gew. % der Polyolstruktureinheiten aus polyaddierten Polyolen hervorgehen, die ein oder mehr Fluor enthaltende Substituenten, sowie zwei oder mehr Isocyanat-reaktive Hydroxylgruppen, aufweisen, mindestens 50 Gew. % der Isocyanatstruktureinheiten aus polyaddierten Polyisocyanat, Polyisocyanat-Derivat und/oder Polyisocyanat-Homologen mit jeweils zwei oder mehreren aliphatischen oder aromatischen Isocyanat-Gruppen oder Mischungen davon hervorgehen und die dispergierten Mineralpartikel iii) farbloses oder weißes Metalloxid in Form von ZnO und/oder TiO₂ enthalten,
**dadurch gekennzeichnet, dass**
mindestens 50 Gew. % der gesamten Metalloxidpartikel iii) eine Partikelgröße von maximal 500 nm (Messnorm für die Bestimmung der Partikelgröße: DIN 53206; nach Dispergieren der Partikel in Wasser mit Ultraschall; Messung durch Photonenkorrelationsspektroskopie) haben.

2. Wässrige Zubereitung nach Anspruch 1, **dadurch gekennzeichnet, dass** die Fluor enthaltenden Substituenten der Polyolstruktureinheiten als Substituenten der allgemeinen Formel
F(CF₂)ₓ - (CH₂)_{y}-
mit x = 4-20 und y = 1 -6
und/oder der allgemeinen Formel
CF₃-CF₂-CF₂O-(CF(CF₃)CF₂O)_{z}-CF(CF₃)-CH₂-
mit z = 1-10,
vorliegen.

3. Wässrige Polydispersion nach Anspruch 1 oder Anspruch 2, **dadurch gekennzeichnet, dass** die Polyolstruktureinheiten, welche ein oder mehr Fluor enthaltende Substituenten enthalten, ein mittleres Molekulargewicht (Zahlenmittel) von 300 bis 4000, bevorzugt von 500 bis 2000 g/mol, aufweisen.

4. Wässrige Zubereitung nach einem der Ansprüche 1 bis 3, **dadurch gekennzeichnet, dass** 50 bis 99, bevorzugt 90 bis 97 Gew. % der Polyolstruktureinheiten aus polyaddierten Polyolkomponenten resultieren, die keine Fluorsubstituenten aufweisen.

5. Wässrige Zubereitung nach einem der Ansprüche 1 bis 4, **dadurch gekennzeichnet, dass** diese 20 bis 50 Gew. % der in dispergierter Form vorliegenden Polyurethanverbindung ii) enthält.

6. Wässrige Zubereitung nach einem der Ansprüche 1 bis 5, **dadurch gekennzeichnet, dass** die Polyurethanverbindung ii) als Fluorsubstituenten enthaltendes Polyurethanpolyharnstoffpolymer vorliegt, das neben den gemäß einer Urethan-Bindung verknüpften Polyol- und Isocyanatstruktureinheiten zusätzlich noch gemäß einer Harnstoff-Bindung verknüpfte Polyaminstruktureinheiten aufweist.

7. Wässrige Zubereitung nach Anspruch 1, **dadurch gekennzeichnet, dass** die Gesamtheit der Partikel, die diese Partikelgröße von maximal 500 nm aufweisen, eine spezifische Oberfläche (bestimmt nach BET-Methode; Norm: DIN 66131) von 10 bis 200 m²/g haben.

8. Wässrige Zubereitung nach einem der Ansprüche 1 bis 7, **dadurch gekennzeichnet, dass** die Mineralpartikel iii) zu mindestens 90 Gew. %, bevorzugt zu nahezu 100 Gew. % ZnO enthalten.

9. Wässrige Zubereitung nach einem der Ansprüche 1 bis 8, **dadurch gekennzeichnet, dass** mindestens 70 Gew. %, bevorzugt mindestens 90 Gew. % der gesamten Mineralpartikel iii) eine Partikelgröße von 10 bis 300 nm (Messnorm für die Bestimmung der Partikelgröße: DIN 53206) haben.

10. Wässrige Zubereitung nach Anspruch 9, **dadurch gekennzeichnet, dass** die Gesamtheit der Partikel, die diese Partikelgröße von 10 bis 300 nm aufweisen, eine spezifische Oberfläche (bestimmt nach BET-Methode; Norm: DIN 66131) von 30 bis 100 m²/g haben.

11. Wässrige Polydispersion nach einem der Ansprüche 1 bis 10, **dadurch gekennzeichnet, dass** diese 1 bis 5 Gew. % dispergierte Mineralpartikel iii) aufweist.

12. Wässrige Polydispersion nach einem der Ansprüche 1 bis 11, **dadurch gekennzeichnet, dass** die Polymerkomponente iv) Polyacrylate, Polymethacrylate, Polystyrol, Polyvinylacetat, Polyurethane, Polyalkyde, Polyepoxide, Polysiloxane, Polyarylonitrile und/oder Polyester aufweist.

13. Wässrige Polydispersion nach einem der Ansprüche 1 bis 11, **dadurch gekennzeichnet, dass** die Polymerkomponente iv) Co- oder Homopolymere von Acrylaten oder Methacrylaten enthält.

14. Wässrige Zubereitung nach Anspruch 13, **dadurch gekennzeichnet, dass** die Polymerkomponente iv) ein Styrol/Alkylacrylat-Copolymer aufweist.

15. Wässrige Zubereitung nach einem der Ansprüche 1 bis 14, **dadurch gekennzeichnet, dass** die Polymerkomponente iv) ein Suspensions- oder Emulsionspolymerisat enthält oder als Suspensions- oder Emulsionspolymerisat vorliegt.

16. Wässrige Zubereitung nach einem der Ansprüche 1 bis 15, **dadurch gekennzeichnet, dass** diese 5 bis 50, bevorzugt 10 bis 30 Gew. % der in dispergierter Form vorliegenden Polymerkomponente iv) enthält.

17. Wässrige Zubereitung zur Beschichtung von Substratoberflächen nach einem der Ansprüche 1 bis 16, enthaltend UV-Stabilisatoren auf der Basis von Aminen, synthetische Eisenoxidpigmente, Entschäumer, Benetzungsmittel und/oder Verlaufsmittel.

18. Verwendung einer wässrigen Zubereitung nach einem der Ansprüche 1 bis 17 zur Beschichtung von mineralischen Materialien, Kunststoffen und Metallen.

19. Verwendung einer wässrigen Zubereitung nach Anspruch 18 zur Beschichtung von mineralischen Dachziegeln.

20. Verfahren zur Beschichtung eines Substrats mit einer wässrigen Zubereitung nach einem der Ansprüche 1 bis 17, **dadurch gekennzeichnet, dass** die Zubereitung 20 bis 500 µm dick auf ein Substrat aufgetragen wird und anschließend das Substrat einem Trocknungsprozess ausgesetzt wird.

21. Beschichtetes Substrat hergestellt nach dem Verfahren gemäß Anspruch 20.

22. Beschichtetes Substrat nach Anspruch 21, welches in Form eines beschichteten, mineralischen Dachziegels vorliegt.

## Claims

1. Aqueous preparation for the coating of substrate surfaces, comprising
i) 20 to 80 wt% of water,
ii) 10 to 75 wt% of a polyurethane compound present in dispersed form,
iii) 0 to 30 wt% of dispersed mineral particles and
iv) 0 to 50 wt% of a polymer component which is present in dispersed form, is different from the polyurethane compound ii) and is present in the form of copolymers or homopolymers or mixtures thereof,
where
the polyurethane compound ii) has polyol and isocyanate structural units linked in the manner of a urethane bond; 1 to 50, preferably 3 to 10 wt% of the polyol structural units originate from polyadducted polyols which have one or more fluorine-containing substituents and also have two or more isocyanate-reactive hydroxyl groups; at least 50 wt% of the isocyanate structural units originate from polyadducted polyisocyanate, polyisocyanate derivative and/or polyisocyanate homologues having in each case two or more aliphatic or aromatic isocyanate groups, or mixtures thereof; and the dispersed mineral particles iii) comprise colourless or white metal oxide in the form of ZnO and/or TiO₂; **characterized in that**
at least 50 wt% of the overall metal oxide particles iii) have a particle size of not more than 500 nm (measurement standard for the determination of the particle size: DIN 53206;
after dispersing of the particles in water with ultrasound; measurement by photon correlation spectroscopy).

2. Aqueous preparation according to Claim 1, **characterized in that** the fluorine-containing substituents of the polyol structural units are present in the form of substituents of the general formula
F(CF₂)ₓ-(CH₂)_{y}-
where x = 4-20 and y = 1-6
and/or of the general formula
CF₃-CF₂-CF₂O-(CF(CF₃)CF₂O)_{z}-CF(CF₃)-CH₂-
where z = 1-10.

3. Aqueous preparation according to Claim 1 or 2, **characterized in that** the polyol structural units which comprise one or more fluorine-containing substituents have an average molecular weight (number average) of 300 to 4000, preferably of 500 to 2000 g/mol.

4. Aqueous preparation according to any of Claims 1 to 3, **characterized in that** 50 to 99, preferably 90 to 97 wt% of the polyol structural units result from polyadducted polyol components which have no fluorine substituents.

5. Aqueous preparation according to any of Claims 1 to 4, **characterized in that** it comprises 20 to 50 wt% of the polyurethane compound ii) present in dispersed form.

6. Aqueous preparation according to any of Claims 1 to 5, **characterized in that** the polyurethane compound ii) is present in the form of polyurethane-polyurea polymer which comprises fluorine substituents and which as well as the polyol and isocyanate structural units linked in the manner of a urethane bond, additionally has polyamine structural units linked in the manner of a urea bond.

7. Aqueous preparation according to Claim 1, **characterized in that** the entirety of the particles which have this particle size of not more than 500 nm have a specific surface area (determined according to the BET method; standard: DIN 66131) of 10 to 200 m²/g.

8. Aqueous preparation according to any of Claims 1 to 7, **characterized in that** to an extent of at least 90 wt%, preferably almost 100 wt%, the mineral particles iii) comprise ZnO.

9. Aqueous preparation according to any of Claims 1 to 8, **characterized in that** at least 70 wt%, preferably at least 90 wt%, of the overall mineral particles iii) have a particle size of 10 to 300 nm (measurement standard for the determination of the particle size: DIN 53206).

10. Aqueous preparation according to Claim 9, **characterized in that** the entirety of the particles which have this particle size of 10 to 300 nm have a specific surface area (determined according to the BET method; standard: DIN 66131) of 30 to 100 m²/g.

11. Aqueous preparation according to any of Claims 1 to 10, **characterized in that** it has 1 to 5 wt% of dispersed mineral particles iii).

12. Aqueous preparation according to any of Claims 1 to 11, **characterized in that** the polymer component iv) comprises polyacrylates, polymethacrylates, polystyrene, polyvinyl acetate, polyurethanes, polyalkyds, polyepoxides, polysiloxanes, polyacrylonitriles and/or polyesters.

13. Aqueous preparation according to any of Claims 1 to 11, **characterized in that** the polymer component iv) comprises copolymers or homopolymers of acrylates or methacrylates.

14. Aqueous preparation according to Claim 13, **characterized in that** the polymer component iv) comprises a styrene/alkyl acrylate copolymer.

15. Aqueous preparation according to any of Claims 1 to 14, **characterized in that** the polymer component iv) comprises a suspension polymer or emulsion polymer or is present in the form of a suspension polymer or emulsion polymer.

16. Aqueous preparation according to any of Claims 1 to 15, **characterized in that** it comprises 5 to 50, preferably 10 to 30 wt% of the polymer component iv) present in dispersed form.

17. Aqueous preparation for the coating of substrate surfaces, according to any of Claims 1 to 16, comprising amine-based UV stabilizers, synthetic iron oxide pigments, defoamers, wetting agents and/or flow control agents.

18. Use of an aqueous preparation according to any of Claims 1 to 17 for the coating of mineral materials, plastics and metals.

19. Use of an aqueous preparation according to Claim 18 for the coating of mineral roof tiles.

20. Method for coating a substrate with an aqueous preparation according to any of Claims 1 to 17, **characterized in that** the preparation is applied at a thickness of 20 to 500 µm to a substrate and then the substrate is subjected to a drying operation.

21. Coated substrate produced by the method according to Claim 20.

22. Coated substrate according to Claim 21, in the form of a coated mineral roof tile.

## Revendications

1. Préparation aqueuse destinée à l'enduction de surfaces de subjectiles, contenant
i) 20 à 80 % en poids d'eau,
ii) 10 à 75 % en poids d'un composé polyuréthane présent sous forme dispersée,
iii) 0,5 à 30 % en poids de particules minérales dispersées et
iv) 0 à 50 % en poids d'un composant polymère présent sous forme dispersée, différent du composé polyuréthane ii), qui se trouve sous forme de copolymères ou d'homopolymères ou de mélanges de ceux-ci,
le composé polyuréthane ii) comportant des motifs structuraux polyol et isocyanate liés conformément à une liaison uréthane, 1 à 50, de préférence 3 à 10 % en poids des motifs structuraux polyol provenant de polyols formés par polyaddition qui comportent un ou plusieurs substituants contenant du fluor, ainsi que deux ou plus de deux groupes hydroxy réactifs avec des isocyanates, au moins 50 % en poids des motifs structuraux isocyanate provenant de polyisocyanate, dérivé de polyisocyanate et/ou homologues de polyisocyanate, formés par polyaddition, comportant chacun deux ou plus de deux groupes isocyanate aliphatiques ou aromatiques, ou de mélanges de ceux-ci, et les particules minérales dispersées iii) contenant un oxyde métallique incolore ou blanc sous forme de ZnO et/ou TiO₂,
**caractérisée en ce**
**qu'**au moins 50 % en poids de la totalité des particules d'oxyde métallique iii) ont une taille de particule d'au maximum 500 nm (norme de mesure pour la détermination de la taille de particule : DIN 53206 ;
après dispersion des particules dans de l'eau avec ultrasons ; mesure par spectroscopie par corrélation de photons).

2. Préparation aqueuse selon la revendication 1, **caractérisée en ce que** les substituants contenant du fluor des motifs structuraux polyol se trouvent sous forme de substituants de formule générale
F(CF₂)ₓ-(CH₂)_{y}-
où x = 4-20 et y = 1 - 6
et/ou de formule générale
CF₃-CF₂-CF₂O-(CF(CF₃)CF₂O)_{z}-CF(CF₃)-CH₂-
où z = 1 - 10.

3. Préparation aqueuse selon la revendication 1 ou la revendication 2, **caractérisée en ce que** les motifs structuraux polyol qui contiennent un ou plusieurs substituants contenant du fluor présentent une masse moléculaire moyenne (moyenne en nombre) de 300 à 4 000, de préférence de 500 à 2 000 g/mole.

4. Préparation aqueuse selon l'une quelconque des revendications 1 à 3, **caractérisée en ce que** 50 à 99, de préférence 90 à 97 % en poids des motifs structuraux polyol résultent de composants polyols ajoutés par polyaddition, qui ne comportent pas de substituants fluorés.

5. Préparation aqueuse selon l'une quelconque des revendications 1 à 4, **caractérisée en ce que** celle-ci contient 20 à 50 % en poids du composé polyuréthane ii) présent sous forme dispersée.

6. Préparation aqueuse selon l'une quelconque des revendications 1 à 5, **caractérisée en ce que** le composé polyuréthane ii) se trouve sous forme de polymère polyuréthane-polyurée contenant des substituants fluorés qui, en plus des motifs structuraux polyol et isocyanate liés conformément à une liaison uréthane, comporte en outre encore des motifs structuraux polyamine liés conformément à une liaison urée.

7. Préparation aqueuse selon la revendication 1, **caractérisée en ce que** la totalité des particules qui présentent cette taille de particule d'au maximum 500 nm ont une surface spécifique (déterminée selon la méthode BET ; norme : DIN 66131) de 10 à 200 m²/g.

8. Préparation aqueuse selon l'une quelconque des revendications 1 à 7, **caractérisée en ce que** les particules minérales iii) contiennent du ZnO à raison d'au moins 90 % en poids, de préférence de presque 100 % en poids.

9. Préparation aqueuse selon l'une quelconque des revendications 1 à 8, **caractérisée en ce qu'**au moins 70 % en poids, de préférence au moins 90 % en poids de la totalité des particules minérales iii) ont une taille de particule de 10 à 300 nm (norme de mesure pour la détermination de la taille de particule : DIN 53206).

10. Préparation aqueuse selon la revendication 9, **caractérisée en ce que** la totalité des particules qui présentent cette taille de particule de 10 à 300 nm ont une surface spécifique (déterminée selon la méthode BET ; norme : DIN 66131) de 30 à 100 m²/g.

11. Préparation aqueuse selon l'une quelconque des revendications 1 à 10, **caractérisée en ce que** celle-ci comporte 1 à 5 % en poids de particules minérales dispersées iii).

12. Préparation aqueuse selon l'une quelconque des revendications 1 à 11, **caractérisée en ce que** le composant polymère iv) comporte des polyacrylates, des polyméthacrylates, du polystyrène, du poly(acétate de vinyle), des polyuréthanes, polyalkydes, polyépoxydes, polysiloxanes, polyacrylonitriles et/ou polyesters.

13. Préparation aqueuse selon l'une quelconque des revendications 1 à 11, **caractérisée en ce que** le composant polymère iv) contient des homopolymères ou copolymères d'acrylates ou de méthacrylates.

14. Préparation aqueuse selon la revendication 13, **caractérisée en ce que** le composant polymère iv) comporte un copolymère styrène/acrylate d'alkyle.

15. Préparation aqueuse selon l'une quelconque des revendications 1 à 14, **caractérisée en ce que** le composant polymère iv) contient un produit de polymérisation en émulsion ou en suspension ou se trouve sous forme de produit de polymérisation en émulsion ou en suspension.

16. Préparation aqueuse selon l'une quelconque des revendications 1 à 15, **caractérisée en ce que** celle-ci contient 5 à 50, de préférence 10 à 30 % en poids du composant polymère iv) présent sous forme dispersée.

17. Préparation aqueuse destinée à l'enduction de surfaces de subjectiles selon l'une quelconque des revendications 1 à 16, contenant des stabilisants UV à base d'amines, des pigments d'oxydes de fer synthétiques, des antimousses, des agents mouillants et/ou des agents d'étalement.

18. Utilisation d'une préparation aqueuse selon l'une quelconque des revendications 1 à 17, pour l'enduction de matériaux minéraux, de matières plastiques et de métaux.

19. Utilisation d'une préparation aqueuse selon la revendication 18, pour l'enduction de tuiles minérales de toit.

20. Procédé pour l'enduction d'un subjectile avec une préparation aqueuse selon l'une quelconque des revendications 1 à 17, **caractérisé en ce qu'**on applique la préparation en une épaisseur de 20 à 500 um sur un subjectile et ensuite on expose le subjectile à un processus de séchage.

21. subjectile revêtu, produit conformément au procédé selon la revendication 20.

22. Subjectile revêtu selon la revendication 21, qui se trouve sous forme d'une tuile minérale de toit revêtue.
